(19) Europäisches Patentamt
European Patent Office
Office européen des brevets

(11) **EP 3 325 981 B1**

(12) **FASCICULE DE BREVET EUROPEEN**

(45) Date de publication et mention
de la délivrance du brevet:
**24.05.2023 Bulletin 2023/21**

(21) Numéro de dépôt: **16738173.0**

(22) Date de dépôt: **12.07.2016**

(51) Classification Internationale des Brevets (IPC):
**G01Q 10/04** *(2010.01)* **G01Q 60/38** *(2010.01)*
**G01Q 70/10** *(2010.01)*

(52) Classification Coopérative des Brevets (CPC):
**G01Q 10/045; G01Q 20/02; G01Q 20/04;
G01Q 30/14; G01Q 60/38; G01Q 60/40;
G01Q 70/06; G01Q 70/10;** G01Q 60/06;
G01Q 60/22; G01Q 60/30; G01Q 60/58

(86) Numéro de dépôt international:
**PCT/EP2016/066549**

(87) Numéro de publication internationale:
**WO 2017/012927 (26.01.2017 Gazette 2017/04)**

(54) **SONDE POUR MICROSCOPIE A FORCE ATOMIQUE A FAIBLE ENCOMBREMENT ET MICROSCOPE A FORCE ATOMIQUE COMPRENANT UNE TELLE SONDE**

SONDE FÜR RASTERKRAFTMIKROSKOP MIT KLEINER GRÖSSE UND DIESE SONDE ENTHALTENDES RASTERKRAFTMIKROSKOP

PROBE FOR ATOMIC FORCE MICROSCOPE WITH SMALL SIZE AND ATOMIC FORCE MICROSCOPE COMPRISING SAID PROBE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2015 FR 1556945**

(43) Date de publication de la demande:
**30.05.2018 Bulletin 2018/22**

(73) Titulaires:
• **Vmicro**
**59652 Villeneuve d'Ascq (FR)**
• **Centre National de la Recherche Scientifique**
**75016 Paris (FR)**

(72) Inventeurs:
• **WALTER, Benjamin**
**59000 Lille (FR)**
• **FAUCHER, Marc**
**59810 Lesquin (FR)**

(74) Mandataire: **Atout PI Laplace**
**Immeuble "Visium"**
**22, avenue Aristide Briand**
**94117 Arcueil Cedex (FR)**

(56) Documents cités:
WO-A1-2013/051094 WO-A1-2013/090887
WO-A2-2004/023490 US-A- 5 801 472
US-A1- 2014 338 074

• Clemens Mueller-Falcke: "Switchable stiffness scanning microscope probe", , juin 2005 (2005-06), XP055273841, Extrait de l'Internet: URL:http://dspace.mit.edu/bitstream/handle /1721.1/32349/61493511-MIT.pdf?sequence=2 [extrait le 2016-05-20] cité dans la demande

EP 3 325 981 B1

## Description

L'invention porte sur une sonde pour microscopie à force atomique et sur un microscope à force atomique comprenant au moins une telle sonde.

La microscopie à force atomique (ou "AFM " pour « Atomic Force Microscopy » en anglais) est une technique de microscopie à balayage développée à partir des années quatre-vingt et permettant d'atteindre une résolution à l'échelle atomique. Contrairement à la microscopie à balayage à effet tunnel, la microscopie à force atomique n'est pas limitée à la formation d'images de surfaces conductrices, ce qui la rend adaptée à des matériaux isolants, semi-conducteurs, voire même à des échantillons de nature biologique. Cette technique trouve application dans de nombreux domaines de la recherche pure et appliquée, mais également dans l'industrie microélectronique. Une introduction générale aux principes de l'AFM est fournie par l'article de F. J. Giessibl et C. F. Quate " Exploring the nanoworld with atomic force microscopy", Physics Today, décembre 2006, pages 44 - 50.

Le composant essentiel d'un microscope à force atomique conventionnel est une sonde constituée par un levier encastré à une extrémité et pourvu, à l'extrémité opposée, d'une pointe orientée vers la surface de l'échantillon à observer. Le levier présente généralement une longueur de l'ordre de quelques dizaines ou centaines de micromètres, et la pointe un rayon de courbure de quelques dizaines ou centaines de nanomètres. Une telle sonde, généralement constituée de silicium monocristallin ou de nitrure de silicium, peut être fabriquée par des techniques photolithographiques conventionnelles, à un coût faible. Lorsque la pointe de la sonde est rapprochée d'une surface, elle subit l'influence de forces attractives ou répulsives de nature chimique, de van der Waals, électrostatiques et/ou magnétiques. En mesurant ces forces pendant que la pointe balaye la surface de l'échantillon à observer, il est possible de reconstituer une image de ce dernier. La mesure des forces s'exerçant entre la pointe et l'échantillon peut s'effectuer de différentes manières. Selon la technique la plus simple et plus ancienne (AFM statique) on se limite à observer, notamment par des moyens optiques, la déflexion du levier encastré supportant la pointe.

Une meilleure sensibilité peut être obtenue en faisant vibrer ce levier selon l'un de ses modes propres de flexion, et en observant les variations de fréquence de résonance induites par les gradients de ces forces (AFM dynamique). En pratique, la technique dynamique est généralement préférée pour les observations effectuées dans le vide ou dans l'air. Cette technique convient moins bien aux observations en milieu liquide, car les vibrations du levier y sont fortement amorties ce qui dégrade le facteur de qualité de la sonde.

Il est également connu d'utiliser des sondes d'AFM exploitant des modes de vibration planaires - on parle aussi de « mouvement vertical » - qui permettent d'atteindre des facteurs de qualités très élevés même en AFM dynamique dans des milieux visqueux.

Par exemple, l'article de Toshu An et al. « Atomically-resolved imaging by frequency-modulation atomic force microscopy using a quartz length-extension resonator», Applied Physics Letters 87, 133114 (2005) décrit une sonde pour AFM comprenant un résonateur micromécanique formé par une poutre en quartz, maintenue en son milieu par un cadre rigide également en en quartz, qui vibre selon un mode extensionnel. Une pointe AFM est collée à une extrémité de cette poutre, alignée avec son axe longitudinal. Ce résonateur présente un facteur de qualité élevé, mais aussi une rigidité importante qui limite fortement l'amplitude des vibrations (typiquement inférieure à 1 nm ou tout au plus de quelques nanomètres). En outre, la sonde n'est pas réalisée de manière monolithique, ce qui limite sa miniaturisation.

La société suisse SPECS GmbH commercialise une sonde AFM « KolibriSensor » basé sur ce principe.

La demande internationale WO 2008/148951 décrit une sonde AFM monolithique utilisant un résonateur en forme d'anneau ou de disque qui oscille selon un mode de volume (déformation dans le plan). Une telle sonde permet d'atteindre des fréquences élevées, ce qui est favorable à l'obtention d'un facteur de qualité élevé même lorsqu'elle est utilisée dans un milieu visqueux. En plus, elle présente une moindre raideur que celle décrite par Toshu An et al., et se prête à une miniaturisation plus poussée car elle peut être réalisée de façon monolithique. Toutefois, l'équilibrage des masses fixées au résonateur - essentiel pour garantir la présence d'un mode à facteur de qualité élevé - est délicat. En outre, il est difficile d'ajouter une connexion électrique permettant d'amener un potentiel continu ou un signal alternatif, éventuellement radiofréquence, à la pointe. En effet, les pistes conductrices réalisant une telle connexion devraient nécessairement passer par les ancrages du résonateur en anneau, qui sont en nombre limité et qui doivent déjà porter les pistes nécessaires à l'excitation et à la détection des oscillations.

Dans sa thèse « Fabrication de micro-résonateurs haute fréquence pour la microscopie à force atomique sur des objets biologiques », soutenue à l'Université de Sciences et Technologie de Lille le 13 décembre 2011, B. Walter (un des présents inventeurs) a décrit une sonde AFM comprenant une pointe fixée à la région médiane d'une poutre flexible qui présente deux ou quatre encastrements, situés de part et d'autre de la pointe. Cette dernière est orientée suivant une direction perpendiculaire à l'axe longitudinal de la poutre. La réalisation d'une telle sonde est délicate car la masse de la pointe perturbe ses modes ; en outre elle est sensible à la position des ancrages, qui doit être choisie avant qu'il soit possible de caractériser la pointe.

Dans sa thèse « Switchable Stiffness Scanning Microscope Probe », soutenue à la Technische Universität Darmstad en juin 2005, Clemens T. Mueller-Falcke décrit une sonde pour AFM verticale à raideur ajustable. Dans cette sonde, la pointe AFM est portée par une poutre longitudinale, qui est reliée à un cadre par un ressort en épingle et un résonateur mécanique en anneau ; le cadre est à son tour relié à un ancrage par des ressorts en épingle. Un actionneur électrostatique est prévu entre l'ancrage et le substrat.

Le document US 5,801,472 décrit une autre sonde pour AFM verticale, dans laquelle la pointe AFM est portée par une poutre longitudinale, qui est reliée à un cadre par des ensembles ressorts/actionneurs permettant un déplacement de la poutre à la fois dans la direction longitudinale et dans une direction transversale.

Le document WO2013/090887 divulgue une sonde comprenant un corps disposé centralement par rapport à un substrat.

Malgré leurs différences structurelles, les sondes AFM exploitant des modes de vibration planaires connues de l'art antérieur partagent un certain nombre d'inconvénients, en particulier leur encombrement. Ces contraintes d'encombrement sont liées au fait que la pointe AFM dépasse relativement peu du substrat planaire sur lequel est réalisée la sonde. En d'autres termes, la pointe s'étend du bord dudit substrat sur une distance qui est très faible par rapport à la largeur du substrat (sa plus grande dimension perpendiculaire à la pointe), mais aussi à son épaisseur (sa plus petite dimension perpendiculaire à la pointe). A cause de cela, la pointe doit être maintenue sensiblement perpendiculaire à la surface de l'échantillon observé par AFM, qui doit être planaire et lisse : toute inclinaison supérieure à quelques degrés, ou toute irrégularité de la surface supérieure à quelques micromètres, conduirait à un contact indésirable entre le substrat de la sonde et l'échantillon. Cela limite très fortement les possibilités d'étudier des échantillons biologiques (qui ne sont généralement pas lisses) et d'effectuer simultanément des analyses ou observations optiques et par AFM d'une même région d'un échantillon.

De prime abord, on pourrait envisager d'atténuer ces contraintes d'encombrement en utilisant des pointes AFM plus longues, ou formées à l'extrémité libre de poutres longues et fines. Cela pose néanmoins des difficultés considérables. En effet, une pointe AFM ou poutre montée en porte-à-faux et s'étendant sur une longueur relativement importante (dix fois sa largeur, voire plus ; typiquement cela correspond à quelques dizaines ou centaines de micromètres) présente des modes parasites de flexion susceptibles d'être activés involontairement et de perturber le fonctionnement normal de la poutre. En outre, dans le cas d'une sonde du type décrit dans WO 2008/148951, une pointe trop longue - et donc lourde - perturberait les modes de déformation elliptique du résonateur en anneau.

Dans le cas de l'article précité de Toshu An et al., la pointe est fixée à l'extrémité d'une poutre de longueur considérable (supérieure à 1 mm). Toutefois, afin d'empêcher l'excitation des modes de flexion et de faciliter le collage de la pointe rapportée, cette poutre présente une section droite relativement importante, avec des dimensions de l'ordre de 100 μm alors que la pointe AFM ne dépasse de la poutre que d'une dizaine de micromètres environ. C'est donc la poutre longitudinale portant la pointe, plus que le cadre qui supporte cette poutre, qui introduit des contraintes d'encombrement qui demeurent relativement sévères.

L'invention vise à remédier aux inconvénients précités de l'art antérieur, et plus particulièrement à relâcher les contraintes d'encombrement dans des sondes AFM à mouvement vertical.

Un objet de l'invention selon la revendication 1, permettant d'atteindre ce but, est un sonde pour microscopie à force atomique comprenant une pointe pour microscopie à force atomique orientée dans une direction dite longitudinale et faisant saillie d'un bord d'un substrat dans ladite direction longitudinale, ladite pointe étant agencée à une extrémité d'une navette fixée audit substrat au moins par l'intermédiaire d'une première et d'une deuxième structure, dites de support, dans laquelle lesdites structures de support sont toutes deux ancrées au substrat et sont reliées à ladite navette à des positions différentes, selon ladite direction longitudinale, de cette dernière ; au moins ladite première structure de support s'étend principalement dans une direction dite transversale, perpendiculaire à la dite direction longitudinale et est ancrée au substrat par au moins une liaison mécanique dans ladite direction transversale, les directions longitudinale et transversale formant un plan parallèle à une surface principale du substrat ; et lesdites structures de support sont déformables (flexibles) dans la direction longitudinale, permettant à la navette de se déplacer dans cette même direction. La sonde présente une structure monolithique et au moins ladite navette et lesdites structures de support sont réalisées dans une couche superficielle, dite couche de dispositif, située au-dessus d'une surface dudit substrat.

Selon différents modes de réalisation particuliers de l'invention :

- Ladite deuxième structure de support peut être un résonateur micromécanique adapté pour être excité afin de mettre ladite navette en oscillation dans ladite direction longitudinale. Plus particulièrement, ledit résonateur micromécanique peut être choisi parmi un résonateur en anneau et au moins une poutre ancrée au substrat par au moins une liaison mécanique et orientée dans ladite direction transversale.
- Ladite deuxième structure de support peut être également une structure flexible, s'étendant dans ladite direction transversale et ancrée au substrat par au moins une liaison mécanique.
- Ladite sonde peut comprendre également au moins un actionneur configuré pour provoquer un déplacement de ladite navette dans ladite direction longitudinale, entrainant une flexion d'au moins ladite première structure de support.
- Ladite sonde peut comprendre également au moins un actionneur configuré pour provoquer un déplacement de ladite navette principalement dans ladite direction transversale, entrainant une flexion d'au moins une dite structure de support.

Selon l'invention, ladite navette présente une forme allongée dans ladite direction longitudinale et fait saillie dudit bord du substrat. En outre, ladite première structure de support est au moins en partie suspendue au-delà dudit bord du substrat. Par ailleurs, la première structure de support est fixée au substrat par l'intermédiaire d'ancrages qui sont, eux aussi, au moins en partie suspendus au-delà dudit bord du substrat.

- Ladite sonde peut comprendre également au moins une piste conductrice reliant un plot d'interconnexion, déposé sur ledit substrat, à ladite pointe pour microscopie à force atomique, en passant par une dite structure de support et par ladite navette. Une telle sonde peut comprendre également deux éléments disposés de part et d'autre de la structure de support portant ladite piste conductrice, lesdits éléments portant des pistes conductrices respectives, formant un guide d'onde planaire avec la piste conductrice passant par ledit élément de support.
- En variante, la sonde peut comprendre deux structures de forme allongée, dites poutres latérales, s'étendant dans ladite direction longitudinale de part et d'autre de la navette, aussi bien ladite navette que lesdites poutres latérales portent des pistes conductrices formant un guide d'onde planaire.
- Ladite sonde peut comprendre également une structure s'étendant au-delà dudit bord du substrat dans une direction oblique en direction de ladite pointe de microscopie à force atomique, ladite structure portant un élément choisi parmi un guide d'onde planaire et un canal microfluidique.
- Ladite navette peut porter, à proximité ou en correspondance de ladite pointe pour microscopie à force atomique, un élément résistif dont les extrémités sont reliées à deux plots d'interconnexion déposés sur ledit substrat par des pistes conductrices respectives passant par ladite première structure de support et par ladite navette.
- Ladite sonde peut comporter un actionneur thermooptique comprenant un tronçon de guide optique planaire solidaire de ladite navette et s'étendant dans ladite direction transversale, ainsi qu'au moins un guide optique planaire agencé à la surface dudit substrat et configuré pour injecter de la lumière dans ledit tronçon de guide optique planaire suivant une direction généralement longitudinale.
- Ladite sonde peut comprendre également un capteur de mouvement comportant un tronçon de guide optique planaire solidaire de ladite navette et s'étendant dans ladite direction transversale, ainsi que deux guides optiques planaires agencés à la surface dudit substrat et couplées optiquement aux extrémités opposées dudit tronçon de guide optique, la force du couplage dépendant de la position du tronçon de guide optique dans ladite direction longitudinale.

- En variante, ladite sonde peut comporter un capteur de mouvement comportant un résonateur optique solidaire de ladite navette, ainsi qu'au moins un guide optique planaire solidaire du substrat et couplé par onde évanescente avec ledit résonateur optique, la force du couplage dépendant de la position de la navette, et donc du résonateur optique, par rapport audit guide optique planaire, dans ladite direction longitudinale.
- Au moins une dite structure de support peut présenter une forme allongée avec des courbures en épingle.

Un autre objet de l'invention selon la revendication 13 est un microscope à force atomique comprenant au moins une telle sonde. Ce microscope peut comprendre également une source de lumière configurée pour générer un faisceau de lumière dirigé vers une région de la surface d'un échantillon en interaction avec la pointe pour microscopie à force atomique de ladite sonde ; et un système de détection de la lumière dudit faisceau diffusée par interaction avec la surface dudit échantillon et ladite pointe. En variante ou en complément, ce microscope peut comprendre également une pointe conductrice agencée pour entrer en contact avec une région de la surface d'un échantillon à proximité de la pointe pour microscopie à force atomique de ladite sonde.

D'autres caractéristiques, détails et avantages de l'invention ressortiront à la lecture de la description faite en référence aux dessins annexés donnés à titre d'exemple et qui représentent, respectivement :

- La figure 1A, une vue en plan d'une sonde AFM selon un exemple qui ne fait pas partie de l'invention selon les revendications;
- La figure 1B, une vue en plan d'une sonde AFM selon un premier mode de réalisation de l'invention ;
- La figure 1C, une vue de détail du côté de la sonde de la figure 1A ou 1B, illustrant la notion d'encombrement angulaire dans un plan perpendiculaire à celui du substrat ;
- La figure 2A, une vue en plan d'une sonde AFM selon un deuxième mode de réalisation de l'invention ;
- Les figures 2B à 2D, trois vues de détails illustrant différentes structures de pointes AFM pouvant être utilisées pour la réalisation de la sonde de la figure 2A ;
- La figure 3, une vue en plan d'une sonde AFM selon un exemple qui ne fait pas partie de l'invention selon les revendications;
- La figure 4, une vue en plan d'une sonde AFM selon un troisième mode de réalisation de l'invention ;
- La figure 5, une vue en plan d'une sonde AFM selon un exemple qui ne fait pas partie de l'invention selon les revendications ;

- La figure 6, une vue en plan d'une sonde AFM selon un exemple qui ne fait pas partie de l'invention selon les revendications ;
- Les figure 7A et 7B, une vue en plan d'une sonde AFM selon un exemple qui ne fait pas partie de l'invention selon les revendications ;
- La figure 7C, une vue en plan d'une sonde AFM selon un exemple qui ne fait pas partie de l'invention selon les revendications ;
- Les figures 8A à 8C, trois vues en plan de sondes AFM selon trois variantes d'un quatrième mode de réalisation de l'invention ;
- La figure 9, une vue en plan d'une sonde AFM selon un cinquième mode de réalisation de l'invention ;
- La figure 10, une vue en plan d'une sonde AFM selon un sixième mode de réalisation de l'invention ;
- La figure 11, une vue en plan d'une sonde AFM selon un septième mode de réalisation de l'invention ;
- La figure 12, une vue en plan d'une sonde AFM selon un huitième mode de réalisation de l'invention ;
- La figure 13, une vue en plan d'une sonde AFM selon un neuvième mode de réalisation de l'invention ;
- La figure 14, une vue en plan d'une sonde AFM selon un dixième mode de réalisation de l'invention ;
- La figure 15, une vue en plan d'une sonde AFM selon un onzième mode de réalisation de l'invention ;
- Les figures 16A et 16B, deux représentations de l'utilisation combinée d'une sonde selon un mode de réalisation de l'invention et d'un faisceau de lumière éclairant la région de la surface d'un échantillon en interaction avec la pointe de cette sonde ;
- La figure 17 une vue illustrant l'utilisation combinée de deux sondes selon un mode de réalisation de l'invention dont les pointes sont en interaction avec une même région de la surface d'un échantillon, d'un faisceau de lumière éclairant cette région de surface et d'une pointe conductrice lui appliquant un potentiel électrique ;
- La figure 18A, une image de microscopie électronique d'une sonde selon un mode de réalisation de l'invention ;
- La figure 18B, la fonction de transfert mécanique de la sonde de la figure 18A ; et
- Les figures 18C et 18D, des mesures obtenues à l'aide de la sonde de la figure 18A.

Une sonde selon l'invention est de préférence fabriquée à partir d'une structure de type SOI (silicium sur isolant), comprenant :

- un substrat en silicium, noté S1 sur les figures, en général épais de 20 μm à 1 mm, de préférence entre 50 et 600 μm ;
- une couche enterrée d'oxyde $SiO_2$, généralement d'une épaisseur comprise entre 0,1 μm et 5 μm, de préférence entre 0,2 μm et 2 μm, notée BOX ; et
- une couche mince de silicium (épaisseur généralement comprise entre 1 nm et 100 μm, de préférence entre 0,25 μm et 5 μm), appelée « couche de dispositif » et notée DL sur les figures (de l'anglais « Device Layer »).

Il est également possible de réaliser la sonde sur un matériau autre que le SOI, par exemple, du SiN déposé sur Si. Il est également possible de réaliser certaines parties de la sonde dans le DL sur SOI et d'autres dans un matériau comme $Si_3N_4$ ou tout autre matériau ayant des propriétés mécaniques convenables. En pratique, tout matériau présentant un rapport entre le module d'Young E et la densité de masse ρ suffisamment

$$1 \; km/s \leq \sqrt{\frac{E}{\rho}} \leq 12 \; km/s$$

élevé (typiquement ) peut convenir à la mise en oeuvre de l'équation. A titre

$$\sqrt{\frac{E}{\rho}} = 9 \; km/s$$

d'exemple, pour le silicium et pour le

$$\sqrt{\frac{E}{\rho}} = 12 \; km/s$$

carbure de silicium .

D'une manière générale, la couche de dispositif est située au-dessus d'une surface du substrat, directement ou par l'interposition de couches intermédiaires (BOX dans le cas d'une structure SOI).

Les sondes selon l'invention peuvent être fabriquées par des procédés technologiques tout à fait conventionnels, décrit par exemple dans la thèse précitée de B. Walter. Typiquement ces procédés comprennent une étape de gravure anisotrope permettant de définir les composants de la sonde (poutres, résonateurs...) dans la couche de dispositif, le cas échéant, une gravure du substrat par sa face arrière, puis une étape de gravure isotrope permettant de libérer ces éléments en éliminant l'oxyde qui les relie au substrat. La pointe, avec un rayon de courbure de l'ordre de 10 nm, peut être obtenue en exposant, par une étape de gravure appropriée, des plans cristallins de la couche de dispositif.

Une sonde selon l'invention comprend un élément dit « navette » portant à son extrémité distale, une pointe d'AFM s'étendant dans la direction longitudinale, au-delà d'un bord du substrat. La navette est supportée par au moins une première et une deuxième structure de support lui permettant un mouvement alternatif dans la direction longitudinale (d'où le nom de « navette ») tout en évitant l'apparition de modes parasites de flexion, autorisant ainsi un fonctionnement de type « vertical » ou « dans le plan », avec une raideur moindre que si la navette elle-même était mise en vibration selon un mode d'élongation comme dans l'article précité de Toshu An et al.

Le mouvement alternatif longitudinal de la navette peut résulter de l'excitation d'un mode d'oscillation résonant de la sonde. En variante, la sonde peut également être utilisée sans être mise en résonance ; dans ce cas, la navette conserve un mouvement dans la direction longitudinale. Les structures de support peuvent être dimensionnées dans ce cas pour offrir une raideur statique très faible (0,01 à 10 N/m, par exemple 0,5 N/m).

Afin de minimiser les problèmes d'encombrement évoqués plus haut, la navette présente une forme allongée dans la direction longitudinale - elle peut par exemple être une poutre, ou une structure formée de poutres alignées dans cette direction - et elle s'étend au-delà du bord du substrat. Dans une variante qui ne fait pas partie de l'invention selon les revendications, la navette peut, par exemple, présenter une forme en anneau.

La première structure de support est une structure flexible s'étendant principalement dans une direction transversale ; il peut s'agir par exemple d'une poutre ou une structure formée de poutres alignées dans cette direction.

La deuxième structure de support peut être du même type que la première, ou d'un type différent. Il peut par exemple s'agir d'un résonateur micromécanique, notamment en anneau.

En tout état de cause, aussi bien la première que la deuxième structure de support sont ancrées au support par au moins une liaison mécanique. Par exemple, s'il s'agit de poutres transversales, elles peuvent être ancrées au substrat à leurs extrémités (voire à une seule extrémité) ou en correspondance d'un noeud d'un mode de flexion.

Un ou plusieurs transducteurs sont généralement prévus pour exciter et/ou détecter le mode d'oscillation longitudinale (ou, plus généralement, pour induire un déplacement longitudinal de la navette). Cependant, la sonde peut aussi ne pas contenir de transducteurs à proprement parler. Une possibilité alternative consiste à utiliser un laser pour exciter thermiquement le résonateur, et un autre laser pour lire l'amplitude mécanique de l'oscillation induite. On peut aussi disposer des guides optiques proches des parties mobiles afin d'injecter ou de récupérer la lumière de ces lasers.

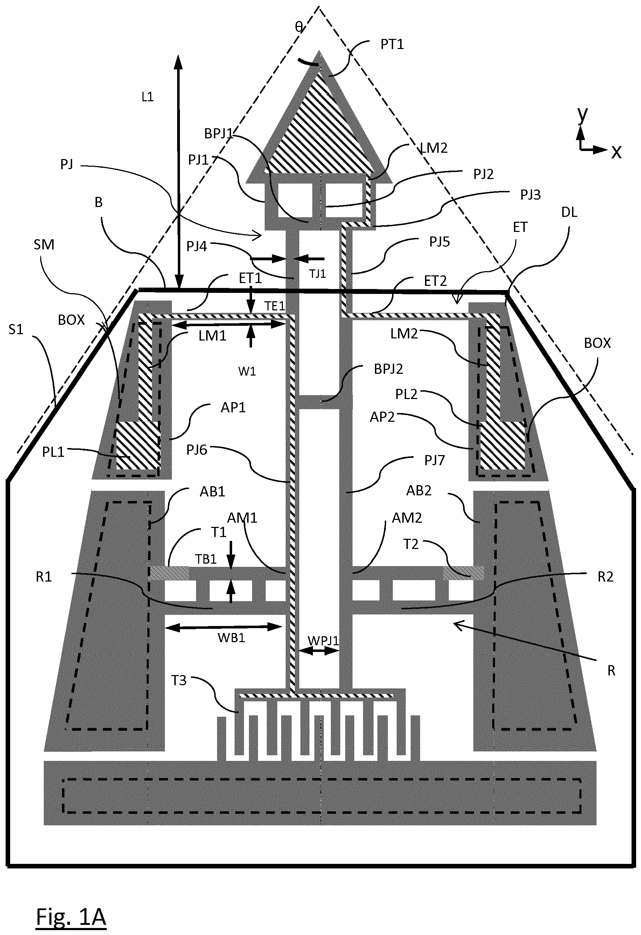

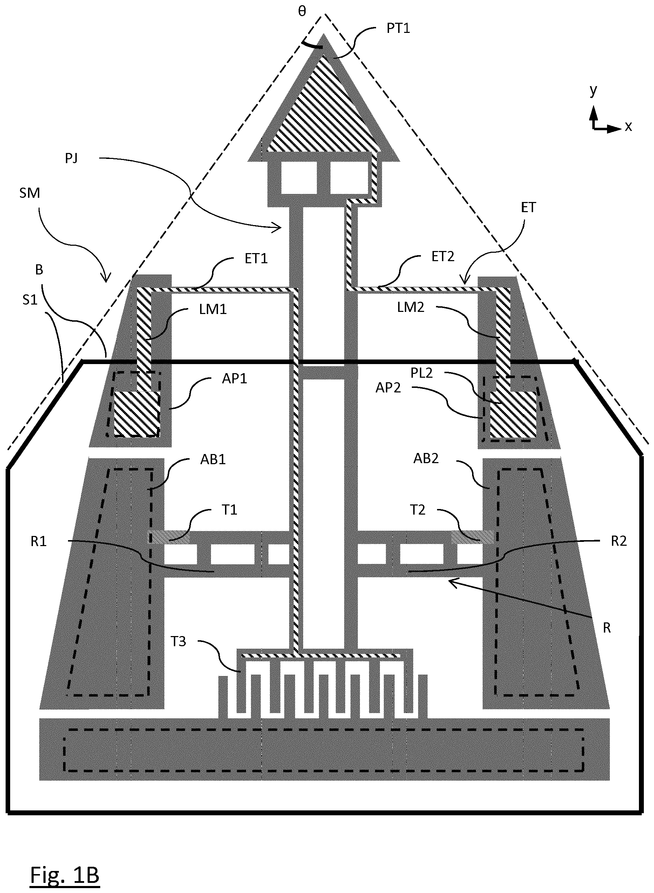

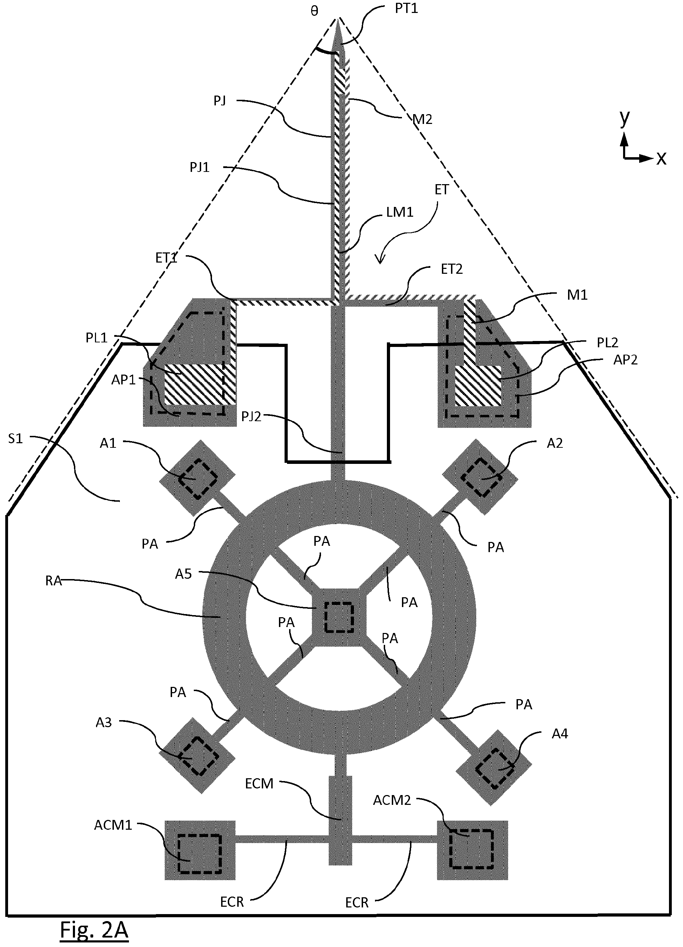

La figure 1A représente une sonde SM selon un exemple qui ne fait pas partie de l'invention selon les revendications. Dans cette figure, et les suivantes, le contour du substrat S1 est représenté par une ligne noire épaisse, la référence B désignant le bord à partir duquel fait saille la poutre longitudinale PJ ; les éléments gravés dans la couche de dispositif DL sont représentés en gris et les métallisations déposées au-dessus de ces éléments sont représentés par des régions hachurées. Uniquement sur les figures 1A, 1B et 2A - afin de ne pas surcharger les autres figures - des traits pointillés représentent la couche d'oxyde subsistant au-dessous des éléments gravés dans la couche de dispositif ; l'oxyde est en retrait par rapport aux bords de ces éléments (et absent au-dessous des éléments les plus fins) car il est attaqué lors d'une étape de gravure isotrope, connue sous le nom de « libération » (« releasing » en anglais) dans le domaine des systèmes micro-électro-mécaniques (MEMS). Dans toutes les figures, la sonde s'étend essentiellement dans un plan x-y (l'axe z correspondant à la direction de l'épaisseur du substrat) ; l'axe y correspond à ce qu'on appelle tout au long de la demande la « direction longitudinale » et x à la « direction transversale ».

La sonde de la figure 1A comporte une pointe PT1 réalisée de manière monolithique à l'extrémité distale (opposée au substrat) d'une navette en forme de poutre longitudinale PJ. Cette dernière est une structure composite, formée par des poutres longitudinales élémentaires PJ1, PJ2, PJ3, PJ4, PJ5, PJ6 et PJ7, reliées par des éléments de raccords transversaux BPJ1, BPJ2. La sonde comprend également une première structure de support en forme de poutre transverse ET- formée par deux parties ET1, ET2 de même longueur W1 (mais les longueurs pourraient aussi être différentes) et de largeur TE1 - et une deuxième structure de support R faisant aussi fonction de résonateur micromécanique. Cette deuxième structure de support comprend deux sous ensembles R1 et R2 en forme d'échelle (deux poutres transversales reliées par des traverses). Elle est conçue pour posséder au moins un mode de vibration M0 à une fréquence f0 qui confère à la pointe un mouvement selon y.

La présence de la première structure de support en forme de poutre transverse ET permet d'utiliser une navette en forme de poutre longitudinale PJ plus longue que dans l'art antérieur (longueur L1, comprise entre le bord du substrat et l'extrémité de la pointe, comprise entre 50 et 100 $\mu$m), et donc d'obtenir un moindre encombrement dans le plan xy ; cet encombrement est défini en particulier par l'angle 0, formé par les deux demi-droites qui partent de l'extrémité de la pointe et qui sont tangentes au substrat. De préférence, cet angle $\theta$ peut atteindre voire dépasser les 45°, ce qui permet, par exemple, d'engager la sonde sur un échantillon à forte topographie.

Dans le cas de la figure 1A, l'élément résonant R (R1, R2) domine la raideur mécanique car la poutre de support ET est de même longueur mais plus fine : TE1 < (TB1+TB2). Selon les besoins, il est possible de régler les raideurs en sens inverse ou de les rendre identiques. Dans le cas de la figure 1A, R1 et R2 sont deux structures en échelle de même longueur WB1, encastrées sur les éléments AB1 et AB2 qui sont solidaires du substrat S1. R1 et R2 sont solidaires de deux poutres longitudinales élémentaires PJ6 et PJ7 aux points AM1 et AM2 notamment. PJ6, PJ7, PJ4, PJ5, PJ1, PJ, PJ3 ainsi que BPJ1 et BPJ2 constituent une structure de jonction entre R1,R2 et la pointe PT1. Cette structure transmet le mouvement selon y des résonateurs R1 et R2 de façon quasi parfaite car elle est rigide selon cette direction. Le degré de rigidité pourra être changé en choisissant une épaisseur TJ1 importante des poutres longitudinales élémentaires PJ6, PJ7, ou en disposant plusieurs poutres longitudinales élémentaires parallèles entre elles et reliées par des 'barreaux' tels que BPJ2 (dans le cas de la figure 1A, il y a deux poutres longitudinales élémentaires de même largeur TJ1, avec un espacement WP1). Les contraintes d'encombrement angulaires déjà mentionnées sont solutionnées par le choix d'une forte longueur de cette structure de jonction ainsi que de la pointe.

Comme cela a été mentionné plus haut, la poutre transversale de support ET (ET1, ET2), solidarisée au substrat par les ancrages AP1, AP2, permet de conserver un mode de vibration purement longitudinale (selon y) et d'empêcher une déformation statique de la poutre longitudinale selon z pendant son balayage de la surface de l'échantillon.

Pour certaines applications, la pointe PT1 sera de préférence d'une surface importante comme c'est le cas en FIG.1A. Elle pourra donc présenter des modes de vibrations en torsion hors plan. Pour éviter ces modes ou les éloigner de la fréquence f0, sans avoir à ajouter une masse importante, on utilise des poutres PJ1, PJ2, PJ3 qui assurent la jonction mécanique avec la partie proximale (proche du substrat) de la structure.

En plus d'empêcher l'apparition de modes de vibration parasites malgré la longueur de la poutre longitudinale PJ, la structure transversale de support ET fournit une solution au problème de l'adressage électrique de la pointe PT1 ou d'une autre partie du résonateur. Par exemple, dans la FIG 1A on a utilisé la demi-poutre transversale ET1 pour supporter une ligne métallique (ou plus généralement une piste conductrice) LM1 qui raccorde électriquement à un plot PL1 le transducteur électrostatique T3, permettant d'exciter l'oscillation longitudinale, au plot PL1, lequel sert à effectuer un raccord électrique à un appareil extérieur, par exemple au moyen d'une sonde ou d'un fil microsoudé. La demi-poutre ET2, quant à elle, est ici utilisée pour porter une ligne métallique LM2 reliant un plot PL2 à la pointe. En variante ou en complément, la structure de transport et la navette pourraient être utilisées pour faire passer un guide d'onde optique planaire, afin d'amener à la pointe un signal optique guidé.

Un avantage considérable de la sonde de la figure 1A par rapport à celle décrite dans le document WO 2008/148951 précité est que, quelle que soit la masse des différents éléments suspendus de la structure, l'existence du mode de vibration fondamental M0 où la structure se translate selon y est aisée à obtenir. Ce mode ne dépend pas de l'équilibrage d'une distribution de masse et de raideur comme dans WO 2008/148951 et si, par un effet du procédé de fabrication, la masse de la pointe changeait, le mode serait toujours présent avec une fréquence modifiée. Dans le cas de WO 2008/148951, on aurait un affaiblissement significatif du facteur de qualité Q, ou bien une perte ou une dégénérescence du mode. En outre, dans le cas de WO 2008/148951, l'anneau offre une raideur statique très importante car il est retenu par des ancrages de raideur élevée ; il ne peut donc pas subir de forces statiques sans que la pointe ne se dégrade. Dans le cas de l'invention, par contre, la souplesse nécessaire est fournie par les structures de support.

Les éléments T1 et T2 schématisent des transducteurs de contrainte intégrés sur la poutre. Ceux ci pourront être piézorésistifs ou piézoélectriques. En variante, T1 et T2 pourraient être utilisés pour actionner, piézoélectriquement ou thermiquement, le mode d'oscillation de la poutre longitudinale, et le transducteur électrostatique T3, en forme de peigne interdigité, être utilisé pour détecter cette oscillation. Ces mêmes transducteurs peuvent servir à actionner ou à détecter un déplacement non résonant de la navette. Bien que le cas d'un transducteur électrostatique en forme de peigne ait été considéré ici, n'importe quel type de transducteur capacitif (capacité planaire, interdigitée...) ou opto-mécanique peut servir à exciter la sonde selon un mode de vibration, ou à lui imposer un déplacement non vibratoire.

Il peut être intéressant de noter que, en apparence, la structure de la sonde de la figure 1A rappelle celle du dispositif décrit dans le document WO 2005/121812 A1, «*multiaxis capacitive transducer and manufacturing method for producing it*». Cependant, ce dernier dispositif est un palpeur électromécanique, et pas une sonde AFM. A ce titre :

- Il présente une bande passante beaucoup trop faible - inférieure à 10 kHz alors que l'AFM exige une fréquence d'oscillation d'au moins 50 kHz ;
- Il est beaucoup trop grand et lourd ;
- Il n'est pas conçu pour être utilisé comme un résonateur, ses modes parasites ne sont donc pas contrôlés.

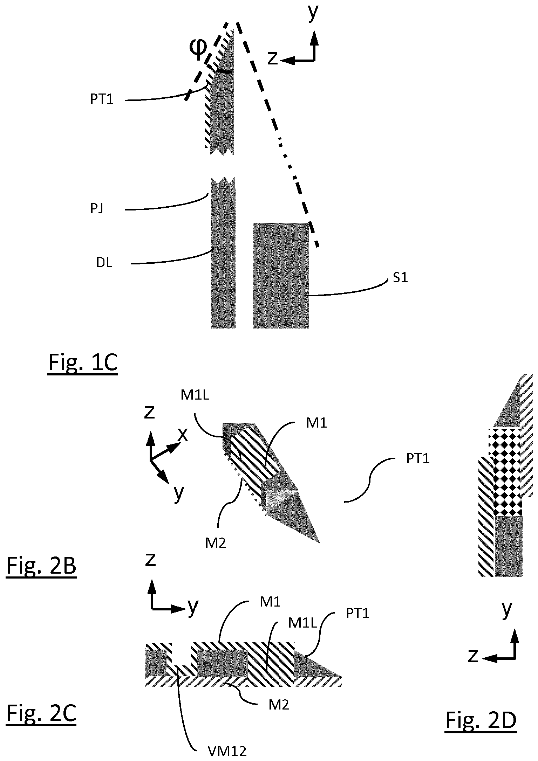

La structure illustrée sur la figure 1A permet de relâcher seulement les contraintes d'encombrement dans le plan xy, exprimées par l'angle θ. Par contre, celle de la figure 1B permet aussi de relâcher les contraintes d'encombrement dans le plan yz, exprimées par l'angle φ (voir la figure 1C). De préférence, cet angle φ pourra atteindre voire dépasser les 45°.

La structure de la figure 1B, qui est un premier mode de réalisation de l'invention, se différencie de celle de la figure 1A par le fait que les ancrages AP1, AP2 de la poutre transversale ET ne sont solidaires du substrat S1 que sur une partie de leur surface, tandis qu'une autre partie, ainsi que la poutre transversale elle-même, s'étend en porte-à-faux au-delà du bord B du substrat (« ancrages partiels »). Cela est rendu possible par le fait que, à condition d'utiliser une largeur suffisante pour AP1 et AP2, la partie de chaque ancrage faisant saillie a une raideur dans le plan xy très importante devant celle de ET. Ainsi cet ancrage, imparfait dans le cas général, à toute fréquence, se révèle suffisant pour ce qui concerne le mode de vibration intéressant à une fréquence particulière.

La figure 2A illustre une sonde selon un deuxième mode de réalisation de l'invention faisant toujours intervenir une pointe PT1 réalisée de manière monolithique à l'extrémité d'une navette en forme de poutre longitudinale en deux parties PJ1 et PJ2 (qui, cette fois, n'a pas une structure composite car la pointe à son extrémité est beaucoup plus fine et légère) et une première structure de support en forme de poutre transversale ET (demi-poutres ET1, ET2) attachée à deux ancrages partiels AP1, AP2, assurant un guidage tout en permettant de réduire l'encombrement dicté par les angles θ et φ. Dans ce mode de réalisation, la seconde structure de support est un résonateur RA en forme d'anneau, capable de procurer une fréquence plus élevée que le résonateur à poutres R. Cet anneau est ancré par exemple à l'intérieur, au moyen de poutres PA reliées à un ancrage A5 non libéré en son centre. On peut aussi l'ancrer à l'extérieur au moyen de poutres PA et d'ancrages A1, A2, A3, A4. L'anneau peut être utilisé selon un mode elliptique (mentionné dans WO 2008/148951) ; dans ce cas il est avantageux d'équilibrer au moins partiellement ce mode au moyen d'un élément de compensation de masse ECM associé à des éléments de compensation de raideur ECR (poutres transversales), attachés à des ancrages ACM1, ACM2. Par choix des dimensions de ces éléments, on pourra atteindre des amplitudes similaires pour le deux portions d'anneau dont les déplacements selon y sont en phase. Les transducteurs ne sont pas représentés. Il pourra s'agir de transducteurs électrostatiques, piézoélectriques, thermiques, piézorésistifs, ou optomécaniques (voir par exemple : S. Tallur, S.A. Bhave, « Partial Gap Transduced MEMS Optoacoustic Oscillator Beyond Gigahertz », Journal of Microelectromechanical Systems n° 99, 2014) intégrés à proximité ou sur l'anneau. On peut, à la place d'un anneau, utiliser un disque ou un résonateur de forme quelconque.

Pour interconnecter électriquement la pointe PT1 ont peut utiliser deux dépôts métalliques - l'un, M1, réalisé « à l'avant », sur le dessus de la pointe et relié à la piste conductrice LM1, l'autre, M2, « à l'arrière», sur le dessous de la pointe, obtenu en retournant la structure pour effectuer un dépôt après libération de la poutre longitudinale. L'interconnexion de ces deux dépôts métalliques peut être obtenue par un dépôt M1L sur le côté de la poutre longitudinale, réalisée en vaporisant du métal avec un angle par rapport à la normale au substrat (figure 2B), en remplissant de métal un trou (« via ») VM12 réalisé par gravure avant libération de la poutre (figure 2C) ou en rendant conductrice par dopage une région de la poutre proche de la pointe (figure 2D, où le silicium dopé est identifié par une texture en échiquier). Ces différentes possibilités sont représentées sur les figures 2B et 2C.

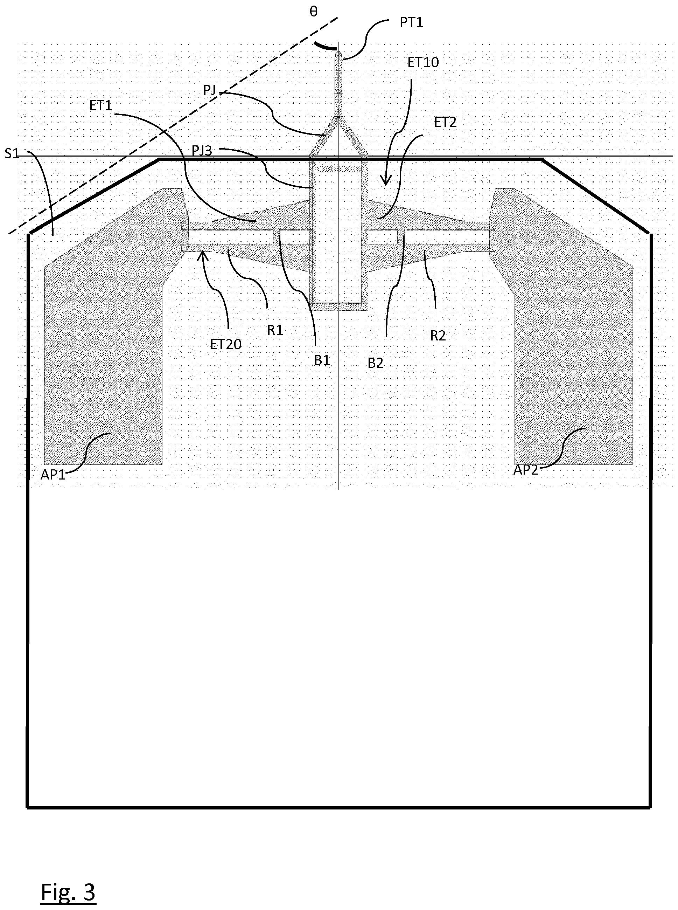

La sonde de la figure 3 (exemple qui ne fait pas partie de l'invention selon les revendications) se caractérise essentiellement par le fait que la première et la deuxième structure de support ET10, ET20, toutes deux en forme de poutre transversale de section non constante, sont très rapprochées et couplées par des barreaux longitudinaux B1, B2. Les actionneurs ne sont pas représentés. La navette PJ présente une forme de cadre rectangulaire avec un barreau transversal dans une portion centrale.

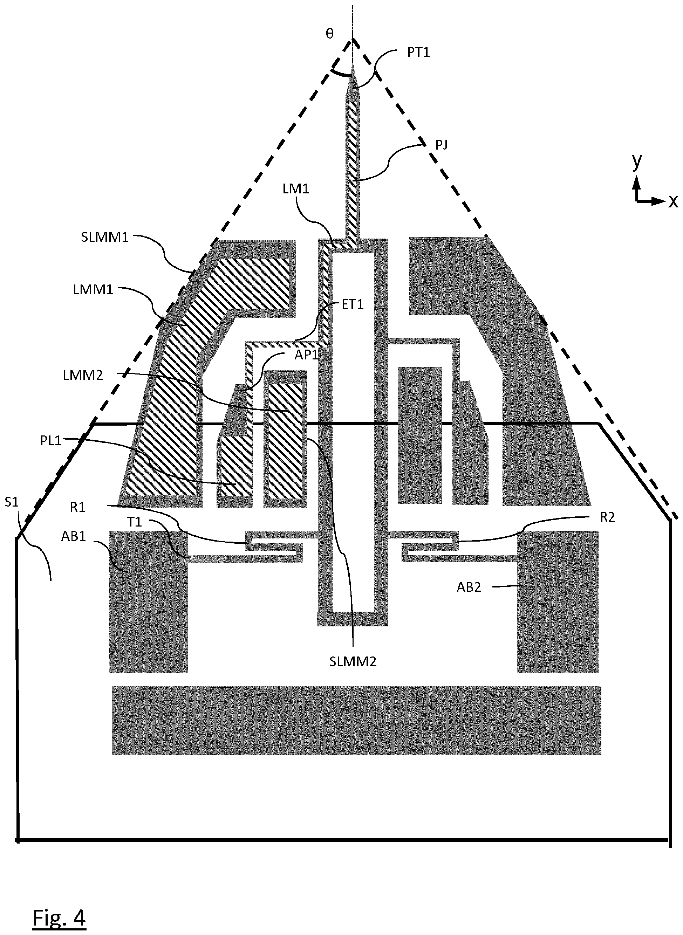

Une sonde selon un troisième mode de réalisation est représentée sur la figure 4. Par rapport aux sondes décrites plus haut, on remarque deux caractéristiques additionnelles.

- On remarque d'abord la présence de deux structures SLMM1, SLMM2 s'étendant de part et d'autre de la première structure de support en forme de poutre transversale ET (et plus particulièrement de la demi-poutre ET1 et de son ancrage) et portant des pistes conductrices LMM1, LMM2 qui forment, avec la ligne métallique LM1 portée par la demi-poutre ET1 et s'étendant jusqu'à la pointe conductrice PT1, un guide d'onde planaire à micro-ondes de type masse-signal-masse (on peut aussi se contenter de la seule structure SLMM1 si un écrantage partiel de la ligne LM1 est suffisant). La présence de ces structures est rendue possible par le faible encombrement dans le plan xy. Cela permet d'appliquer un signal microondes, ou plus généralement radiofréquences, à la pointe et donc très proche l'échantillon à étudier. Des structures symétriques, mais sans métallisation, sont prévues du côté opposé de la poutre longitudinale, dans un but d'équilibrage.

- Ensuite, on peut remarquer que les deux demi-poutres R1, R2 formant la deuxième structure de support R présentent des courbures en épingle à cheveux, qui permettent d'en réduire la raideur sans en augmenter la longueur et donc l'encombrement latéral. Des poutres transversales de ce type, en épingle à cheveux ou à méandres, peuvent également être utilisées dans d'autres modes de réalisation de l'invention.

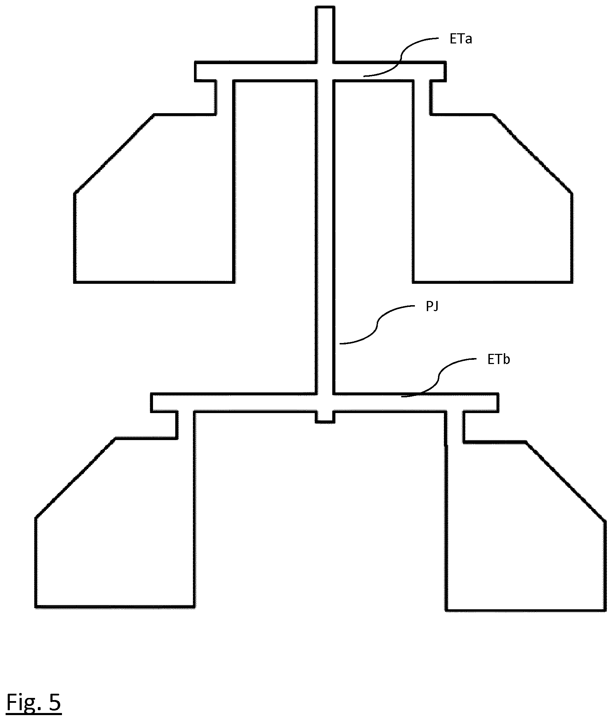

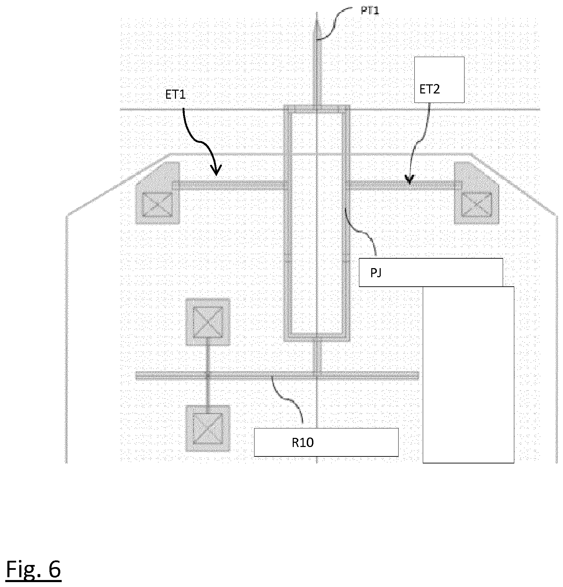

Dans les modes de réalisation considérés jusqu'ici, les structures de support en forme de poutre transversale sont ancrées au substrat par leurs extrémités opposées, et la sonde présente une symétrie par rapport à un axe longitudinal. Cela n'est pas indispensable. Par exemple, la figure 5 illustre une sonde selon un exemple qui ne fait pas partie de l'invention selon les revendications dans lequel les deux structures de support, indiquées par les références ETa et ETb, sont des poutres ancrées au substrat par des liens mécaniques en des points nodaux d'un mode d'oscillation autres que les extrémités. De même, la figure 6 illustre une sonde selon un exemple qui ne fait pas partie de l'invention selon les revendications dans lequel la deuxième structure de support R10 est une poutre transversale présentant un seul encastrement situé d'un côté de la sonde, qui est donc non-symétrique.

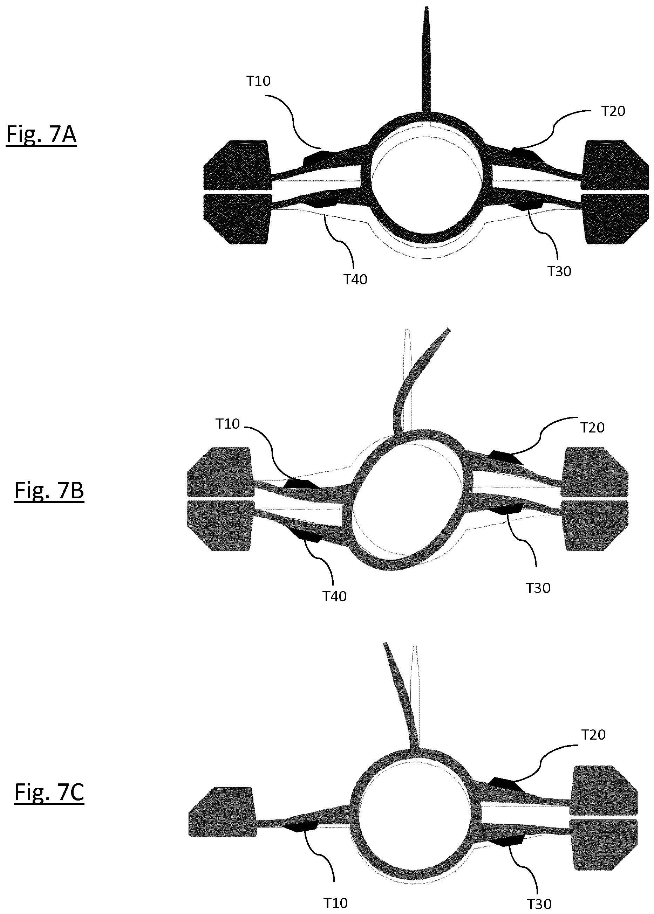

Dans les modes de réalisation considérés jusqu'ici, la sonde fonctionne selon un mode de vibration qui impartit à la navette un mouvement oscillatoire dans une direction longitudinale. Toutefois, une sonde selon l'invention peut également être utilisée dans un mode résonant qui permet à la pointe d'avoir un mouvement principalement transversal (selon la direction x). Cela est illustré sur les figures 7A - 7C, dans lesquelles les structures de support sont en forme de poutres (ou d'échelles formées de poutres) qui se déforment selon un mode de flexion dans le plan avec une flèche importante selon la direction y. Dans cette sonde, la navette comprend une poutre de longueur 12 microns, à l'extrémité de laquelle se trouve la pointe, et un anneau de rayon externe 7,8 microns. Les structures de support sont 4 poutres trapézoïdales de longueur 10 microns.. Cette sonde possède un premier mode de vibration à 8,6 MHz (on suppose l'utilisation d'un substrat en Si orienté (100)). Ce mode, qui produit un déplacement de la pointe selon la direction y, peut être excité par exemple par tout transducteur capable de générer des contraintes capables de produire une flexion dans le plan sur au moins une des 4 poutres de support (dans le mode de réalisation de la figure, on utilise quatre transducteurs piézoélectriques T10, T20, T30 et T40). D'autre part, la sonde présente un deuxième mode de vibration (fig. 7B) à 15,5 MHz dans lequel la pointe oscille principalement selon la direction x, les deux poutres de support de droite se retrouvent alors en opposition de phase avec les deux poutres support de gauche. Ce mode peut être aussi mis en mouvement en excitant en flexion l'une des poutres de support. La sonde montrée en fig. 7C est de même dimensions que celle des figures 7A et 7B, mais dispose d'une poutre en moins ce qui rend la structures de support non symétrique. Ceci conduit à un mode de vibration à 7,7 MHz ou la pointe a un déplacement comportant une composante à la fois selon x et selon y. D'une manière générale, le rapport de ces composantes entre elles peut être choisi en modifiant la structure de support, et/ou la forme de la navette.

De cette manière, on peut mesurer des forces de cisaillement entre la pointe et un échantillon avec lequel elle interagit ; voir à ce propos l'article de K. Karrai et al., Appl. Phys. Lett 66 (14), 1995.

Il est également possible, avec une sonde selon l'invention, de tirer parti de l'ingénierie des modes de vibration non pas pour les utiliser, mais pour les éviter et fournir ainsi une mesure de force quasi-statique avec une bande passante élevée. En particulier, une courbe d'approche - retrait quasi-statique peut être réalisée avec un taux de répétition inférieur à la fréquence du mode fondamental d'oscillation longitudinale (par exemple, 15 MHz). Cette fréquence peut être celle d'un actionneur externe faisant partie du microscope, les transducteurs intégrés sur la sonde servant à mesurer la déflexion quasi-statique de la pointe dans la direction longitudinale (y). Dans ce cas, la navette se déplace dans la direction longitudinale selon un mouvement alternatif, mais qui ne peut pas être qualifié d'oscillation selon un mode propre de la structure micromécanique, car il n'y a pas de résonance.

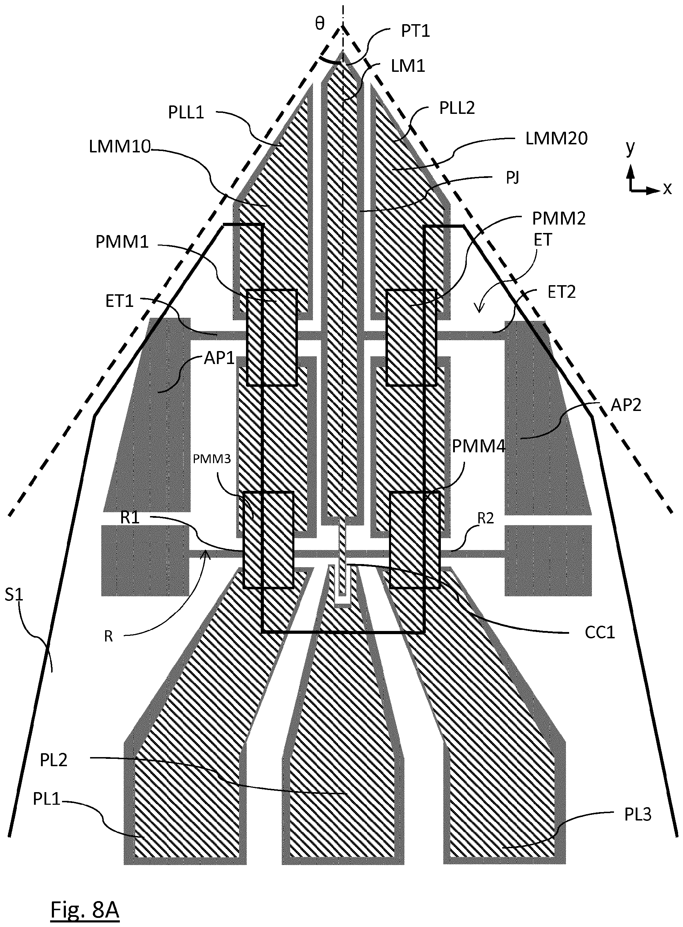

Les figures 8A à 8C illustrent différentes variantes d'une sonde selon un quatrième mode de réalisation de l'invention. Il s'agit également d'une sonde avec pointe conductrice, optimisée afin de propager des signaux à haute fréquence. Deux poutres PLL1, PLL2, dites poutres latérales, s'étendent longitudinalement de part et d'autre de la navette PJ. Elles portent deux lignes métalliques latérales LMM10, LMM20 qui forment, avec la ligne métallique centrale LM1 portée par la navette PJ, un guide d'onde planaire de type masse-signal-masse. Les plots PL1, PL2 et PL3 permettent de relier les trois lignes métalliques à un générateur de signal radiofréquences ou microondes.

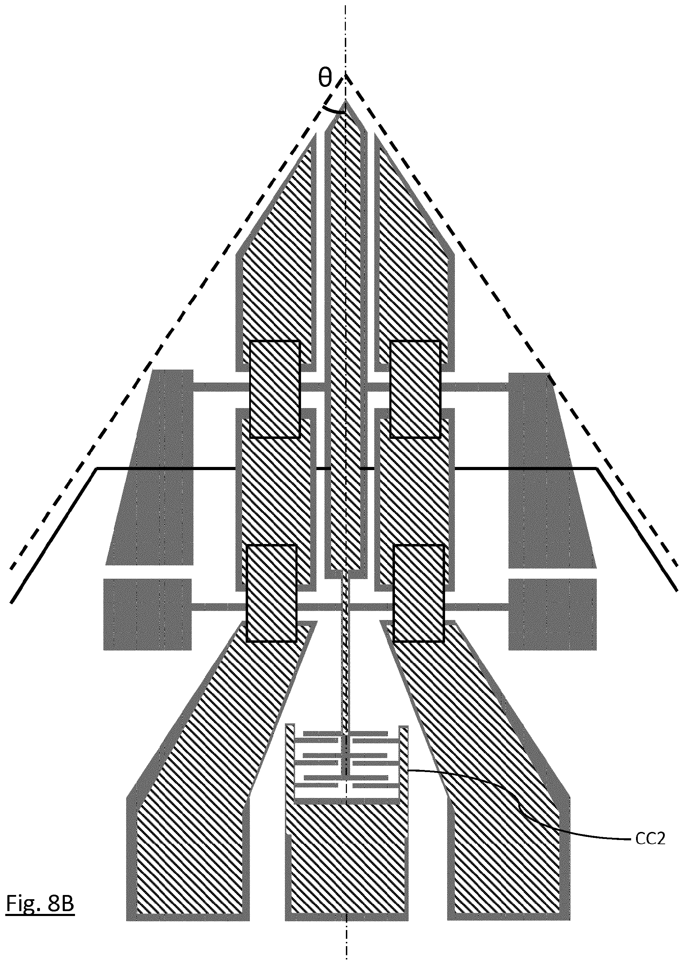

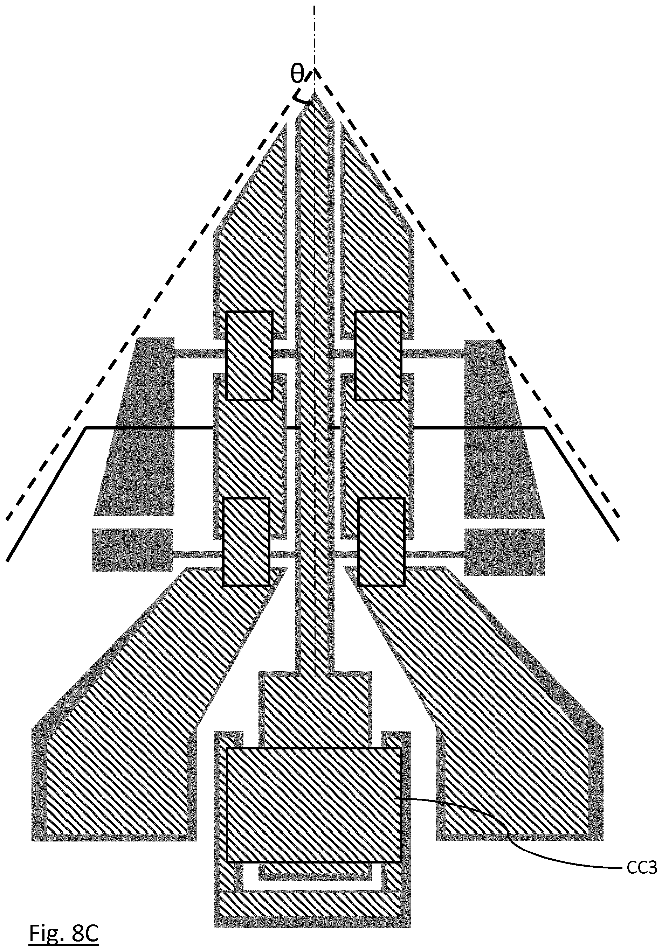

Afin d'éviter que les lignes métalliques latérales LMM1, LMM2 ne gênent l'oscillation de la navette, ces lignes comprennent des « ponts » métalliques PMM1, PMM2, PMM3, PMM4 qui enjambent la poutre transversale de support ET (ET1, ET2) et le résonateur R (R1, R2). Ces ponts sont réalisés par des techniques de « lift-off » conventionnelles, ou de dépôt électrolytique. Pour la même raison, la ligne de signal LM1 doit être interrompue en sa partie arrière (opposée à la pointe). Ainsi le signal se propage par couplage capacitif. Sur la figure 8A, la référence CC1 dénote une capacité de couplage du signal. Sur la figure 8B, la référence CC2 dénote une autre capacité de couplage, présentant une structure de peignes interdigités. Sur la figure 8C, la référence CC3 dénote une autre capacité de couplage, de type planaire par recouvrement.

En variante, on pourrait aussi :

- Avoir une structure similaire mais en enlevant une des masses de façon à obtenir un guide bifilaire ; et/ou
- Utiliser des poutres en épingle (cf. R1 et R2 sur la figure 4) et/ou faire passer la masse sur le pourtour des ancrages de poutres afin de ne pas avoir à faire des ponts ; et/ou
- Utiliser le silicium du substrat S1 afin d'avoir un plan de masse sous tout ou une partie du guide central et avoir un guide micro-ruban ; et/ou
- Utiliser une couche métallique supplémentaire pour recouvrir le conducteur central par un pont qui est relié à LMM1 et LMM2.
- Utiliser une couche métallique en face arrière afin de constituer une ligne micro-ruban sur tout ou partie du trajet à parcourir pour l'onde RF.

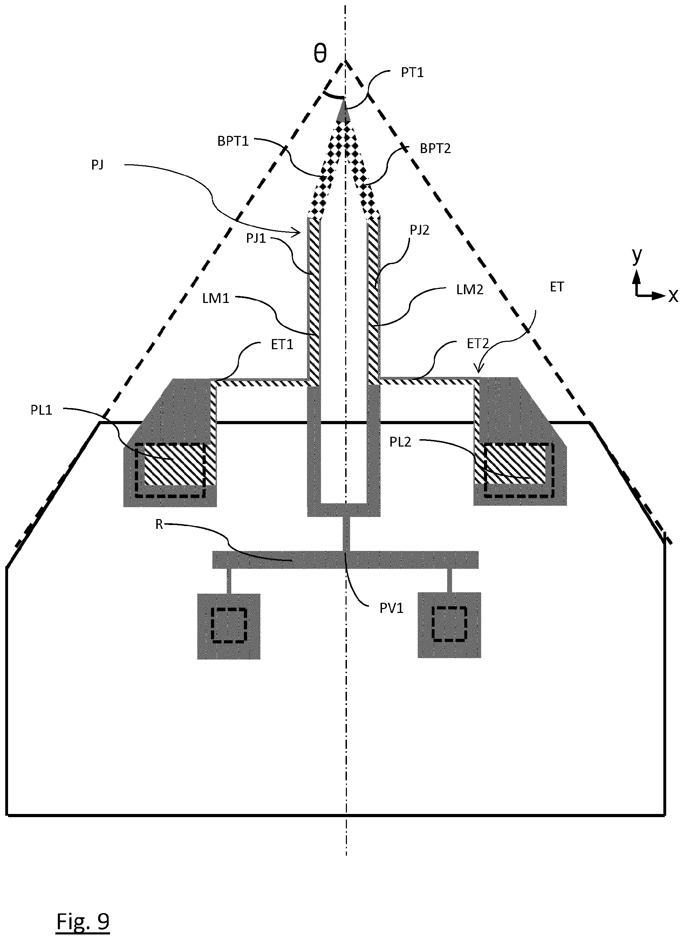

La figure 9 illustre une sonde selon un cinquième mode de réalisation de l'invention. Dans cette sonde, la navette PJ comprend deux poutres longitudinales PJ1, PJ2 parallèles entre elles qui sont prolongées dans la direction distale (y positifs) par deux bras BPT1, BPT2 convergents dont la jonction forme la pointe PT1. Les poutres longitudinales PJ1, PJ2 portent des lignes conductrices LM1, LM2 qui s'étendent jusqu'à des plots de connexion PL1, PL2, situés sur les ancrages de la première structure de support en forme de poutre transversale, en passant par les deux demi-poutres transversales ET1, ET2. Leur séparation mécanique permet d'éviter un court circuit électrique si on utilise de fortes tensions. Ceci permet de faire passer un courant à proximité ou dans la pointe afin de mettre en oeuvre un chauffage local, par exemple pour des applications de microscopie thermique à balayage (« Scanning Thermal Microscopy », SThM). Pour chauffer la pointe PT1 en silicium on peut doper les bras BPT1, BPT2 et réaliser des contacts ohmiques avec le métal de la ligne LM1; ceci permet de disposer d'une résistance d'accès faible. Sur la figure 9, les régions identifiées par une texture en échiquier sont en silicium dopé.

La deuxième structure de support R est un résonateur composé d'une poutre vibrant en flexion dans le plan, solidaire de PJ1 et PJ2 au niveau d'un point ventral PV1 qui est le lieu ou l'on obtient la plus forte amplitude de mouvement en flexion selon l'axe y.

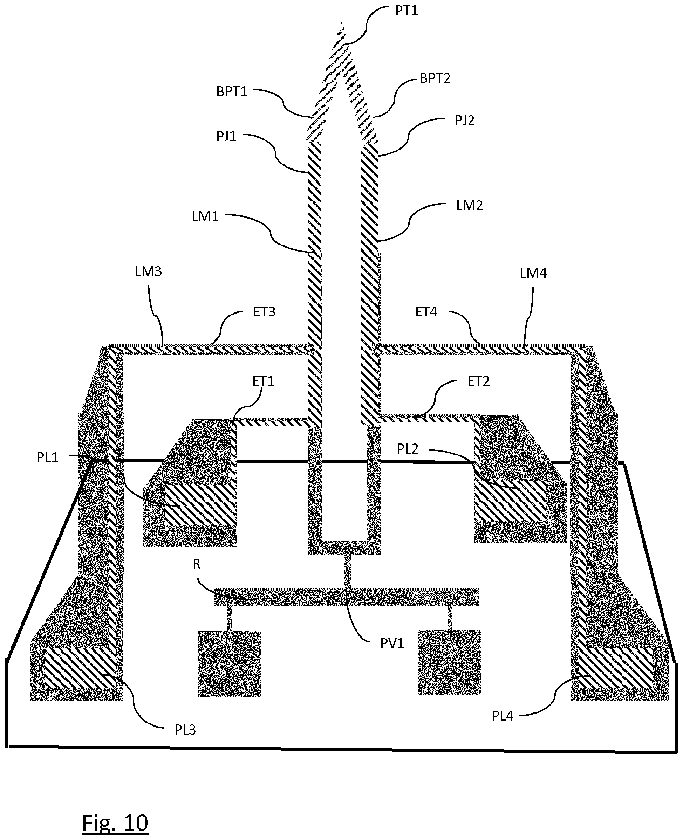

La figure 10 illustre un sixième mode de réalisation qui est en fait une variante du précédent, comprenant aussi une deuxième poutre transversale de maintien ET3, ET4 portant des lignes métalliques LM3, LM4 reliées à des plots PL3, PL4 réalisés sur les ancrage. Cette structure permet une mesure 4 pointes de la résistance intégrée sur la pointe (en semiconducteur dopé ou en métal). Pour cela on injecte/récupère le courant par les plots PL1/PL2 et on mesure le potentiel aux bornes de PL3 et PL4. Les éléments ET3 et ET4 n'empêchent pas l'existence d'un mode M0 car ils sont tout aussi flexibles dans le plan que ET1 et ET2.

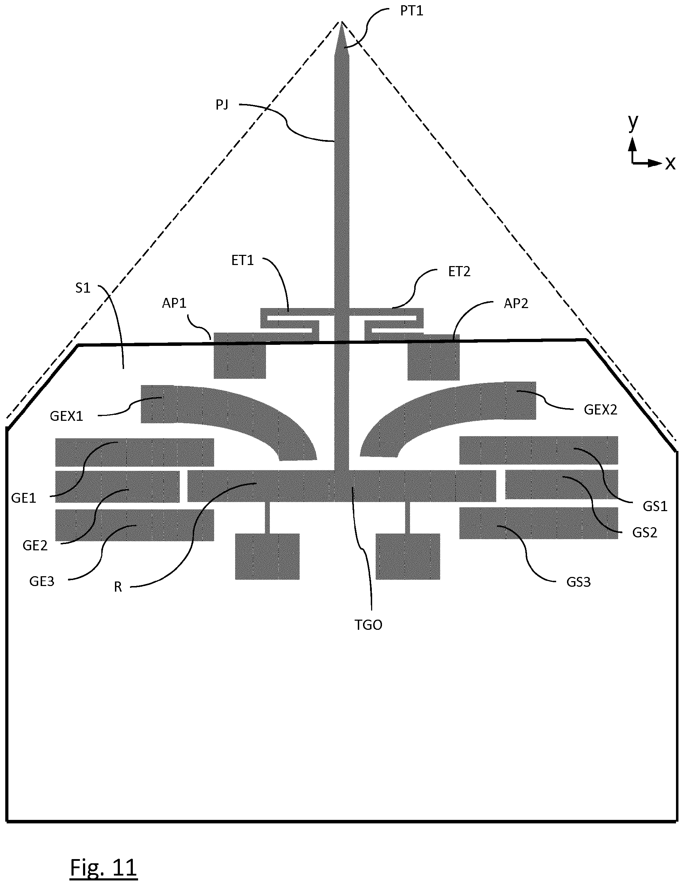

Dans le septième mode de réalisation de l'invention (figure 11), la deuxième structure de support est un résonateur micromécanique R comprenant un tronçon de guide optique planaire TGO, et est actionné thermo-optiquement par injection de puissance optique dans ce guide par les guides planaires GEX1, GEX2. La lecture du mouvement est réalisée selon plusieurs possibilités basées sur l'injection de lumière par des guides planaires GE1, GE2, GE3 situés d'un coté et la lecture par des guides planaires GS1, GS2, GS3 situés de l'autre coté.

Première possibilité : les guides GE2, GE3, GS1 et GS2 ne sont pas nécessaires. Le guide GE1 injecte de la lumière dans une extrémité de TGO par couplage évanescent ; à l'extrémité opposée, une partie de cette lumière est récupérée dans GS3, toujours par couplage évanescent. La force des couplages varie avec la position de TGO - et donc de la poutre longitudinale PJ. On peut réaliser un montage différentiel et mesurer la différence [Signal(GS1))-(Signal(GS3)].

Seconde possibilité : les guides GE1, GE3, GS1, GS3 ne sont pas nécessaires. On injecte de la lumière dans TGO par couplage direct au moyen de GE2, et on mesure la variation de signal dans GS2. Là encore, la force des couplages (directs) varie avec la position de TGO - et donc de la poutre longitudinale PJ.

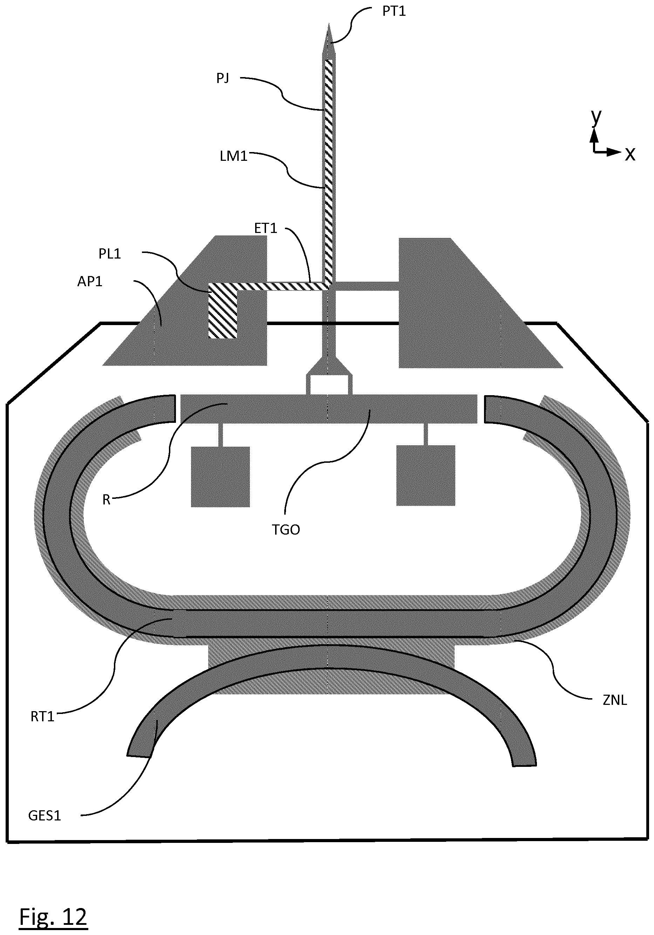

La figure 12 illustre un huitième mode de réalisation qui est en fait une variante du précédent, dans laquelle la lumière est injectée par couplage évanescent depuis un guide GES1 dans un guide RT1 en forme de « C », qui reboucle la sortie de R sur l'entrée et constitue un pseudo résonateur optique (« pseudo » car les pertes sont assez élevées). Là encore, les pertes varient avec la position de TGO - et donc de la poutre longitudinale PJ.

Pour assurer un rendement technologique et des performances meilleures, on peut faire en sorte que la partie indiquée par ZNL soit non libérée (et donc solidaire du substrat). Cela n'est en rien préjudiciable au mouvement M0 du résonateur mécanique. Dans ce mode de réalisation la pointe PT1 est conductrice et reliée à un plot PL1 par une ligne LM1 passant sur la poutre transversale ET et la poutre longitudinale PJ, mais cela est indépendant de la partie optique.

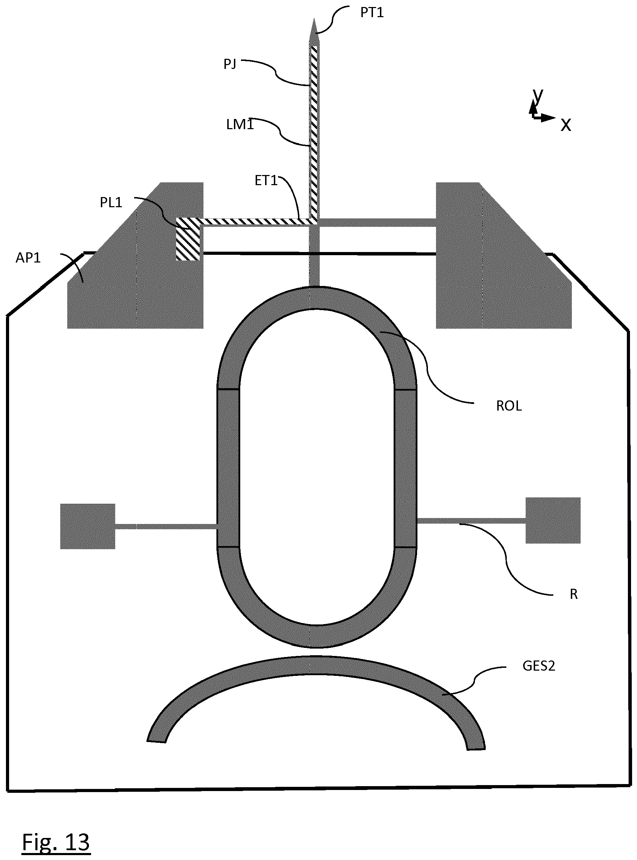

La figure 13 illustre un neuvième mode de réalisation de l'invention dans lequel la navette inclut un résonateur optique libéré ROL en forme de circuit optique rebouclé, couplé par onde évanescente avec un guide GES2. Les déplacements de la navette induisent un changement de la distance entre le résonateur optique ROL et le guide d'onde, et donc du couplage optomécanique. La figure illustre un résonateur optique ROL en forme d'anneau, mais cela n'est pas essentiel ; le résonateur pourrait aussi utiliser des miroirs de Bragg ou être un résonateur à disque. La navette peut aussi contenir seulement une portion d'un résonateur optique. L'autre portion étant situé à proximité de la navette. Les déplacements de la navette induisent une modification substantielle de la cavité optomécanique formée par les deux portions.

Dans le septième, le huitième et le neuvième mode de réalisation, les sources et les détecteurs de lumière peuvent être intégrés à la sonde ou être des dispositifs distincts.

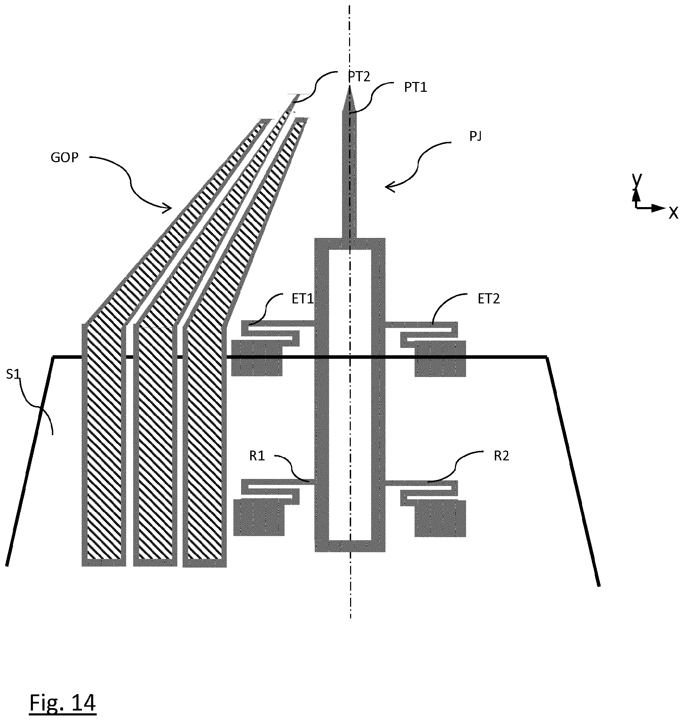

Dans le dixième mode de réalisation (figure 14), le faible encombrement de la sonde permet d'intégrer sur le même support un guide d'onde planaire pour microondes ou à radiofréquence GOP, par exemple à trois conducteurs du type masse-signal-masse, s'étendant dans une direction oblique dans le plan xy, dirigée vers la sonde AFM et dont le conducteur de signal (ici, le conducteur central) se termine par une pointe PT2, non destinée à osciller mais ayant sensiblement la même position longitudinale (coordonnée y) que la pointe AFM PT1 dans son état de repos. Un tel dispositif peut être utilisé pour des applications de microscopie microondes à balayage (SMM de l'anglais « Scanning Microwave Microscopy »).

En variante, le guide d'onde pour microondes ou à radiofréquence GOP pourrait être remplacé par un guide optique planaire.

Dans le cas particulier de la figure 14, les éléments ET1 et ET2 sont des poutres en méandre, ou en épingle à cheveux, ce qui permet, en conservant une faible raideur, de donner un encombrement latéral encore plus faible au résonateur (cf. figure 4). R1 et R2 sont identiques à ET1 et ET2. La poutre longitudinale PJ et la pointe PT1 sont sensiblement identiques à celles de la figure 4, mais sans ligne conductrice.

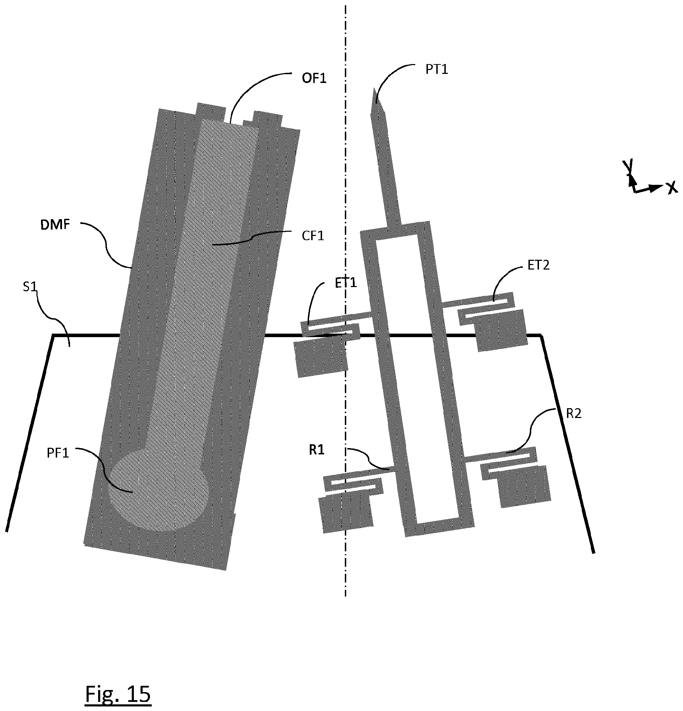

Dans le mode de réalisation de la figure 15, le guide d'onde planaire GOP est remplacé par un dispositif microfluidique DMF comprenant un canal CF1, une zone permettant le raccord au monde extérieur PF1, le tout permettant de dispenser un fluide par une ouverture OF1 dont la position est proche de la pointe AFM PT1. Le faible encombrement de la sonde va permettre de réguler la position du dispositif microfluidique par rapport à la surface. Un angle peut être donné afin de rapprocher PT1 et OF1. On peut utiliser une pluralité de dispositifs fluidiques ou de pointes sur le même substrat S1. Un tel dispositif permet l'étude de réactions chimiques en milieu liquide en utilisant des très faibles doses de réactifs, par exemple pour des applications de diagnostic biologique.

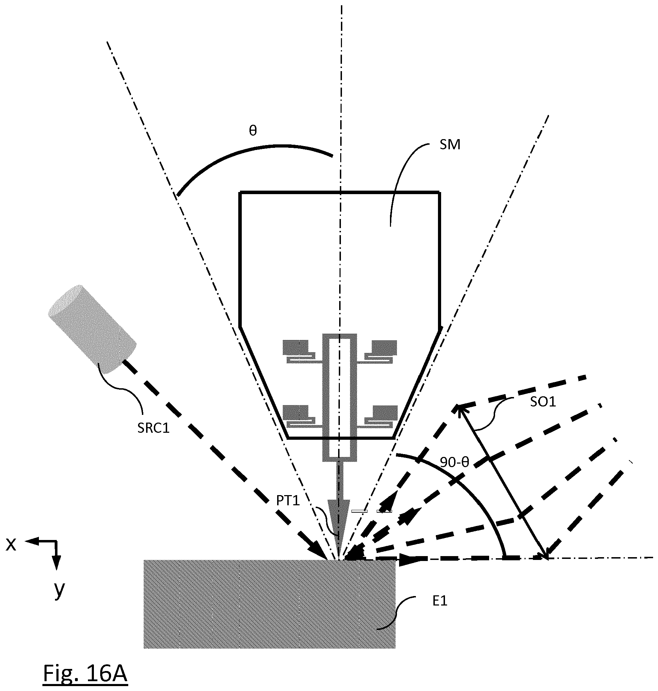

Le faible encombrement des sondes selon l'invention permet notamment leur utilisation dans des modes d'imagerie faisant intervenir une source lumineuse SRC1 qui irradie la pointe PT1 et/ou la surface de l'échantillon E1 avec laquelle elle interagit pour l'imager en AFM. En FIG. 16A, on voit tout l'intérêt de disposer d'un faible encombrement dans le plan (angle θ petit),qui permet de laisser un angle (90°- θ ) pour réaliser l'éclairage et un angle de même ouverture pour collecter la lumière diffusée au moyen d'un système de collecte et détection de lumière (représenté sur la figure par la lentille SO1). Un tel montage permet de réaliser un microscope optique à champ proche à balayage (SNOM, de l'anglais « Scanning Near Field Optical Microscope) du type sans ouverture, de réaliser des analyses de spectroscopie Raman amplifiée par pointe (TERS, de l'anglais « Tip-Enhanced Raman Spectroscopy ») ou de fluorescence.

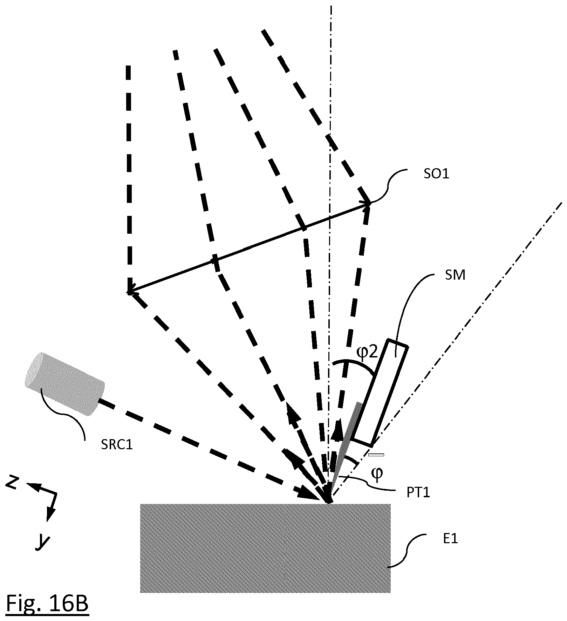

En FIG. 16B, on voit l'intérêt de disposer d'un faible encombrement dans le plan yz (angle φ petit): plus φ est petit, plus on peut incliner la sonde dans le plan yz selon un angle φ2. Cela va permettre de collecter la lumière selon des angles qui seraient favorisés par la forme de la pointe et l'interaction champ électromagnétique-surface.

Dans les exemples des figures 16A et 16B, la sonde AFM (référence SM) et la source / détecteur de lumière SRC1/SO1 sont les éléments essentiels d'un appareil qui constitue à la fois un microscope à force atomique et un microscope à champ proche optique de type « sans ouverture ».

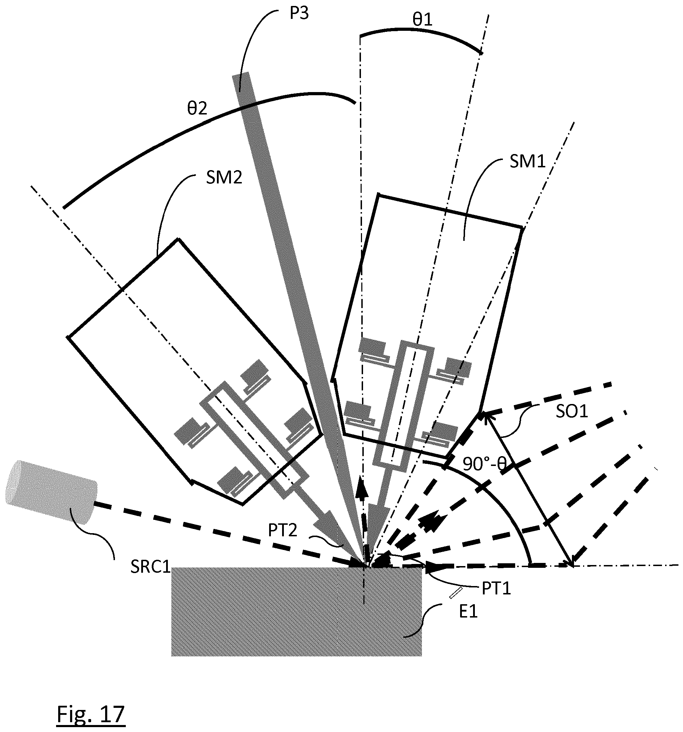

Grâce au faible encombrement des sondes selon l'invention, il est possible de réaliser des microscopes complexes, ouvrant des perspectives jusque là inenvisageables. La figure 17 illustre, à titre d'exemple, un montage comprenant deux sondes SM1, SM2 selon l'invention dont les pointes PT1, PT2 interagissent avec une même région de la surface de l'échantillon E1, région qui est par ailleurs éclairée par un faisceau lumineux (par exemple laser) émis par une source SRC1, un système de collection et détection SO1 collectant la lumière diffusée ; en outre une pointe conductrice P3 touche la surface de l'échantillon à proximité immédiate de PT1 et PT2 (distance typiquement inférieure à 100 μm, voire 10 μm) pour y appliquer un potentiel électrique, continu ou alternatif. La pointe P3 peut être remplacée par une pointe de microscopie à effet tunnel et/ou le nombre de sondes AFM à faible encombrement peut être supérieur à 2. On peut répartir ces sondes en jouant à la fois sur les

angles θ et φ ; dans l'exemple de la figure, les deux sondes sont dans un même plan et forment des angles θ1 et θ2 avec la normale à la surface de l'échantillon.

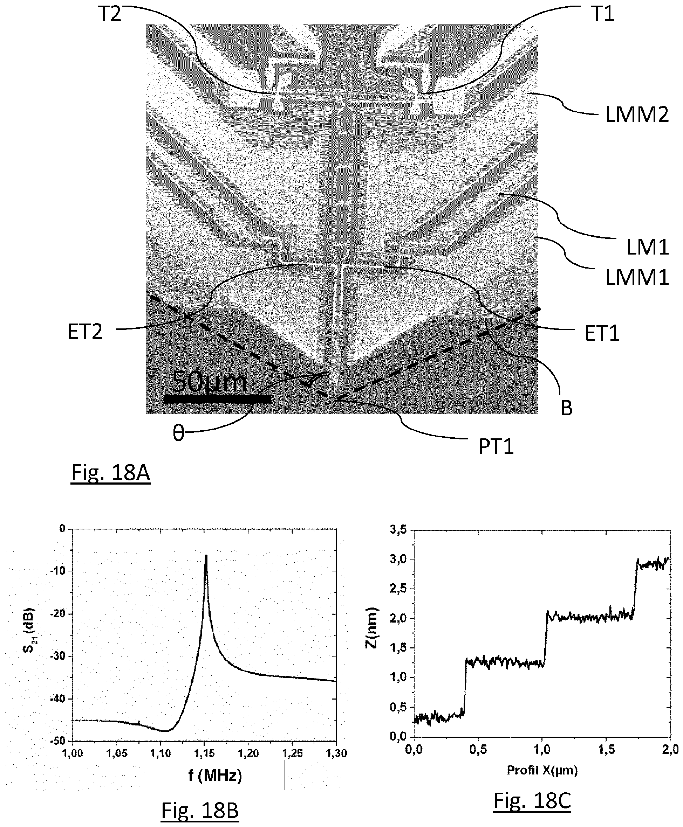

La figure 18A est une image de microscopie électronique d'une sonde AFM selon un mode de réalisation de l'invention. Dans sa partie arrière (côté substrat) cette sonde comprend deux transducteurs résistifs identiques T1, T2, dont l'un est utilisé en tant qu'actionneur thermique, et l'autre en tant que capteur piézorésistif. Ces transducteurs s'étendent dans une direction transversale et servent également de structures de support. D'autres structures de support ET1, ET2, prenant la forme de poutres transversales, sont agencés plus près de la pointe PT1. Les structures de support ET1, ET2 portent chacun une piste métallique LM1 qui est reliée électriquement à la pointe PT1 de la manière décrite plus haut en référence à la figure 2B. Deux autres pistes métalliques, LMM1 et LMM2 sont agencées de part et d'autre de chaque piste LM1, de manière à former une structure de guide d'onde planaire, selon le principe expliqué plus haut en référence à la figure 4. L'angle θ a une valeur de 60° ; l'angle φ, non visible sur la figure, une valeur de 80° (la pointe dépasse de 50 μm du bord du substrat, dont l'épaisseur vaut 300 μm). Il s'agit donc effectivement d'une sonde à faible encombrement.

La figure 1B montre la fonction de transfert mécanique de cette sonde, mesurée avec un signal d'excitation ayant une amplitude de 200 mV avec une polarisation du transducteur d'actionnement de 3 mA et une polarisation du transducteur de détection également de 3 mA. On peut voir que la fréquence de résonance vaut 1,16 MHz.

La sonde a été utilisée en mode AM (modulation d'amplitude) pour détecter la topologie d'un échantillon de SiC dont la surface présente des marches de 750pm de hauteur et 500 nm de largeur. Le résultat de cette mesure est illustré sur la figure 1C. On remarque le bon rapport signal à bruit.

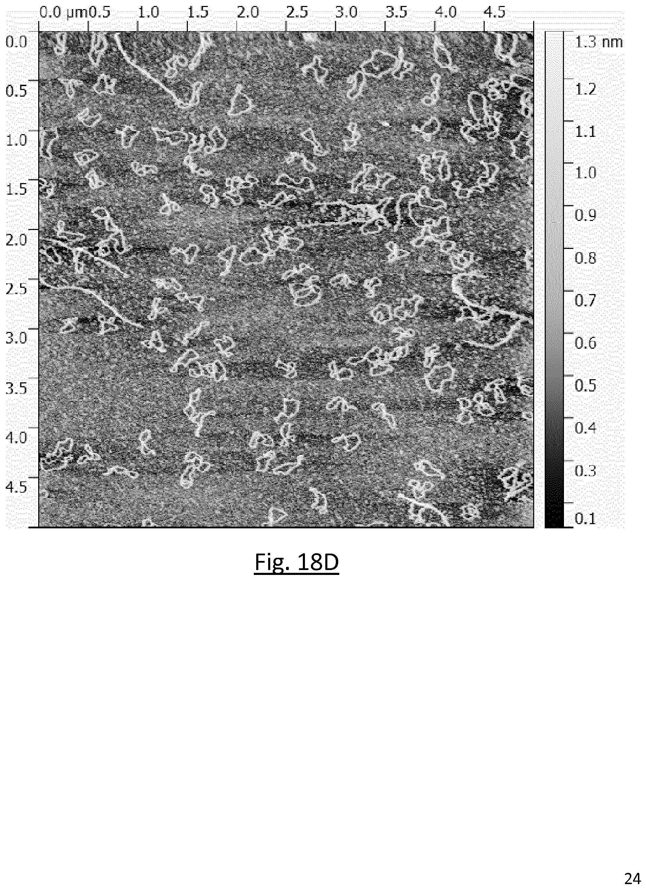

La sonde a également été utilisée pour acquérir une image de plasmides circulaires sur une surface en mica. L'image, reproduite sur la figure 18D, a été obtenue en mode FM (modulation de fréquence) sans contact, avec une consigne de décalage en fréquence de 75Hz.

**Revendications**

1. Sonde pour microscopie à force atomique comprenant une pointe pour microscopie à force atomique (PT1) orientée dans une direction dite longitudinale (y) et faisant saillie d'un bord (B) d'un substrat (S1) dans ladite direction longitudinale, ladite pointe étant agencée à une extrémité d'une navette (PJ1) fixée audit substrat au moins par l'intermédiaire d'une première (ET) et d'une deuxième (R, RA) structure, dites de support, où

   - lesdites structures de support sont toutes deux ancrées au substrat et sont reliées à ladite navette à des positions différentes, selon ladite direction longitudinale, de cette dernière ;

- au moins ladite première structure de support s'étend principalement dans une direction dite transversale (x), perpendiculaire à la dite direction longitudinale et est ancrée au substrat par au moins une liaison mécanique dans ladite direction transversale, les directions longitudinale et transversale formant un plan parallèle à une surface principale du substrat ;

- lesdites structures de support sont déformables dans la direction longitudinale, permettant à la navette de se déplacer dans cette même direction ;

- ladite sonde présentant une structure monolithique, dans laquelle au moins ladite navette et lesdites structures de support sont réalisées dans une couche superficielle (DL), dite couche de dispositif, située au-dessus d'une surface dudit substrat, et ladite navette présente une forme allongée dans ladite direction longitudinale et fait saillie dudit bord du substrat;

**caractérisée en ce que**

- ladite première structure de support est au moins en partie suspendue au-delà dudit bord du substrat ; et

- ladite première structure de support est fixée au substrat par l'intermédiaire d'ancrages (AP1, AP2) qui sont, eux aussi, au moins en partie suspendus au-delà dudit bord du substrat.

2. Sonde pour microscopie à force atomique selon la revendication 1, dans laquelle ladite deuxième structure de support est un résonateur micromécanique (R R1, R2, RA) adapté pour être excité afin de mettre ladite navette en oscillation dans ladite direction longitudinale.

3. Sonde pour microscopie à force atomique selon l'une des revendications précédentes, dans laquelle ladite deuxième structure de support est également une structure flexible, s'étendant dans ladite direction transversale et ancrée au substrat par au moins une liaison mécanique.

4. Sonde pour microscopie à force atomique selon l'une des revendications précédentes, comprenant également au moins un actionneur (T1, T2 ; GEX1, GEX2, GR) configuré pour provoquer un déplacement de ladite navette choisi parmi :

- un déplacement dans ladite direction longitudinale, entrainant une flexion d'au moins ladite première structure de support ; et
- un déplacement principalement dans ladite direction transversale, entrainant une flexion d'au moins une dite structure de support.

5. Sonde pour microscopie à force atomique selon l'une des revendications précédentes, comprenant également au moins une piste conductrice (LM1) reliant un plot d'interconnexion (PL1), déposé sur ledit substrat, à ladite pointe pour microscopie à force atomique, en passant par une dite structure de support et par ladite navette.

6. Sonde pour microscopie à force atomique selon la revendication 5 comprenant également deux éléments (SLMM1, SLMM2) disposés de part et d'autre de la structure de support portant ladite piste conductrice, lesdits éléments portant des pistes conductrices respectives (LMM1, LMM2), formant un guide d'onde planaire avec la piste conductrice passant par ledit élément de support.

7. Sonde pour microscopie à force atomique selon l'une des revendications 1 à 4 comprenant deux structures de forme allongée, dites poutres latérales (PLL1, PLL2), s'étendant dans ladite direction longitudinale de part et d'autre de la navette, dans laquelle aussi bien ladite navette que lesdites poutres latérales portent des pistes conductrices (LMM10, LMM20) formant un guide d'onde planaire.

8. Sonde pour microscopie à force atomique selon l'une des revendications précédentes, comportant également une structure s'étendant au-delà dudit bord du substrat dans une direction oblique en direction de ladite pointe de microscopie à force atomique, ladite structure portant un élément choisi parmi un guide d'onde planaire (GOP) et un canal microfluidique (DMF).

9. Sonde pour microscopie à force atomique selon l'une des revendications précédentes, dans laquelle ladite navette porte, à proximité ou en correspondance de ladite pointe pour microscopie à force atomique, un élément résistif (BPT1, BPT2) dont les extrémités sont reliées à deux plots d'interconnexion (PL1, PL2) déposés sur ledit substrat par des pistes conductrices respectives passant par ladite première structure de support et par ladite navette.

10. Sonde pour microscopie à force atomique selon l'une des revendications précédentes, comportant un actionneur thermo-optique comprenant un tronçon de guide optique planaire (TGO) solidaire de ladite navette et s'étendant dans ladite direction transversale, ainsi qu'au moins un guide optique planaire (GEX1, GEX2) agencé à la surface dudit substrat et configuré pour injecter de la lumière dans ledit tronçon de guide optique planaire suivant une direction généralement longitudinale.

11. Sonde pour microscopie à force atomique selon l'une des revendications précédentes comprenant un capteur de mouvement comportant un tronçon de guide optique planaire (TGO) solidaire de ladite navette et s'étendant dans ladite direction transversale, ainsi que deux guides optiques planaires (GE1, GE2, GE3 ; GS1, GS2, GS3) agencés à la surface dudit substrat et couplées optiquement aux extrémités opposées dudit tronçon de guide optique, la force du couplage dépendant de la position du tronçon de guide optique dans ladite direction longitudinale.

12. Sonde pour microscopie à force atomique selon l'une des revendications 1 à 10 comportant un capteur de mouvement comportant un résonateur optique (ROL) solidaire de ladite navette, ainsi qu'au moins un guide optique planaire (GES2) solidaire du substrat et couplé par onde évanescente avec ledit résonateur optique, la force du couplage dépendant de la position de la navette, et donc du résonateur optique, par rapport audit guide optique planaire, dans ladite direction longitudinale.

13. Microscope à force atomique comprenant au moins une sonde (SM, SM1, SM2) selon l'une des revendications précédentes.

14. Microscope à force atomique selon la revendication 13, comprenant également :

     - une source de lumière (SRC1) configurée pour générer un faisceau de lumière dirigé vers une région de la surface d'un échantillon en interaction avec la pointe pour microscopie à force atomique de ladite sonde ; et
     - un système de détection (SO1) de la lumière dudit faisceau diffusée par interaction avec la surface dudit échantillon et ladite pointe.

**Patentansprüche**

1. Sonde für Rasterkraftmikroskopie, die eine Rasterkraftmikroskopiespitze (PT1) umfasst, die in einer longitudinal genannten Richtung (y) orientiert ist und von einem Rand (B) eines Substrats (S1) in dieser longitudinalen Richtung vorsteht, wobei die Spitze an einem Ende eines Shuttles (PJ1) angeordnet ist, das mindestens über eine erste (ET) und eine zweite (R, RA) Struktur, Trägerstruktur genannt, an dem Substrat befestigt ist, wobei

     - die Trägerstrukturen beide am Substrat verankert und an unterschiedlichen Positionen in der longitudinalen Richtung des Shuttles mit diesem verbunden sind;
     - mindestens die erste Trägerstruktur sich hauptsächlich in einer transversal genannten Richtung (x) lotrecht zu der longitudinalen Richtung erstreckt und durch mindestens eine mechanische Verbindung in der transversalen Richtung am Substrat verankert ist, wobei die longitudinale und die transversale Richtung eine Ebene parallel zu einer Hauptfläche des Substrats bilden;
     - die Trägerstrukturen in der longitudinalen Richtung verformbar sind, so dass sich das Shuttle in dieser Richtung bewegen kann;
     - wobei die Sonde eine monolithische Struktur aufweist, in der mindestens das Shuttle und die Trägerstrukturen in einer über einer Oberfläche des Substrats gelegenen Oberflächenschicht (DL), Vorrichtungsschicht genannt, hergestellt sind und das Shuttle eine in der longitudinalen Richtung längliche Form aufweist und vom Rand des Substrats vorsteht;
     **dadurch gekennzeichnet, dass**
     - die erste Trägerstruktur mindestens teilweise über den Rand des Substrats hinaus aufgehängt ist; und
     - die erste Trägerstruktur am Substrat über Anker (AP1, AP2) befestigt ist, die ebenfalls mindestens teilweise über dem Rand des Substrats aufgehängt sind.

2. Sonde für Rasterkraftmikroskopie nach Anspruch 1, wobei die zweite Trägerstruktur ein mikromechanischer Resonator (R R1, R2, RA) ist, der so ausgelegt ist, dass er angeregt werden kann, um das Shuttle in der longitudinalen Richtung in Schwingung zu versetzen.

3. Sonde für Rasterkraftmikroskopie nach einem der vorhergehenden Ansprüche, wobei die zweite Trägerstruktur auch eine flexible Struktur ist, die sich in der transversalen Richtung erstreckt und durch mindestens eine mechanische Verbindung mit dem Substrat verankert ist.

4. Sonde für Rasterkraftmikroskopie nach einem der vorhergehenden Ansprüche, die ferner mindestens einen Aktuator (T1, T2; GEX1, GEX2, GR) umfasst, konfiguriert zum Bewirken einer Bewegung des Shuttles, ausgewählt aus:

     - einer Bewegung in der longitudinalen Richtung, die eine Biegung von mindestens der ersten Trägerstruktur bewirkt; und
     - einer Bewegung hauptsächlich in der transversalen Richtung, die eine Biegung von mindestens einer Trägerstruktur bewirkt.

5. Sonde für Rasterkraftmikroskopie nach einem der vorhergehenden Ansprüche, die ferner mindestens eine Leiterbahn (LM1) umfasst, die ein auf das Substrat abgesetztes Verbindungsstück (PL1) mit der Rasterkraftmikroskopiespitze verbindet, indem sie durch die Trägerstruktur und das Shuttle verläuft.

**6.** Sonde für Rasterkraftmikroskopie nach Anspruch 5, die ferner zwei Elemente (SLMM1, SLMM2) umfasst, die auf beiden Seiten der die Leiterbahn tragenden Trägerstruktur angeordnet sind, wobei die Elemente jeweilige Leiterbahnen (LMM1, LMM2) tragen, die einen planaren Wellenleiter mit der durch das Trägerelement verlaufenden Leiterbahn bilden.

**7.** Sonde für Rasterkraftmikroskopie nach einem der Ansprüche 1 bis 4, die zwei längliche Strukturen umfasst, Seitenträger (PLL1, PLL2) genannt, die sich in der longitudinalen Richtung auf beiden Seiten des Shuttles erstrecken, wobei sowohl das Shuttle als auch die Seitenträger einen planaren Wellenleiter bildende Leiterbahnen (LMM10, LMM20) tragen.

**8.** Sonde für Rasterkraftmikroskopie nach einem der vorhergehenden Ansprüche, die ferner eine Struktur aufweist, die sich über den Rand des Substrats hinaus in einer schrägen Richtung zur Rasterkraftmikroskopiespitze hin erstreckt, wobei die Struktur ein Element ausgewählt aus einem planaren Wellenleiter (GOP) und einem Mikrofluidkanal (DMF) trägt.

**9.** Sonde für Rasterkraftmikroskopie nach einem der vorhergehenden Ansprüche, wobei das Shuttle nahe oder in Korrespondenz mit der Rasterkraftmikroskopiespitze ein Widerstandselement (BPT1, BPT2) trägt, dessen Enden mit zwei auf dem Substrat abgesetzten Verbindungsstücken (PL1, PL2) über jeweilige Leiterbahnen verbunden sind, die durch die erste Trägerstruktur und das Shuttle verlaufen.

**10.** Sonde für Rasterkraftmikroskopie nach einem der vorhergehenden Ansprüche, die einen thermooptischen Aktuator aufweist, der einen planaren Lichtleiterstrang (TGO) fest verbunden mit dem Shuttle und sich in der transversalen Richtung erstreckend und mindestens einen planaren Lichtleiter (GEX1, GEX2) umfasst, der auf der Oberfläche des Substrats angeordnet und zum Speisen von Licht in den planaren Lichtleiterstrang in einer allgemein longitudinalen Richtung konfiguriert ist.

**11.** Sonde für Rasterkraftmikroskopie nach einem der vorhergehenden Ansprüche, die einen Bewegungssensor umfasst, der einen planaren Lichtleiterstrang (TGO) fest verbunden mit dem Shuttle und sich in der transversalen Richtung erstreckend und zwei planare Lichtleiter (GE1, GE2, GE3; GS1, GS2, GS3) aufweist, die auf der Oberfläche des Substrats angeordnet und an den gegenüberliegenden Enden des Lichtleiterstrangs optisch gekoppelt sind, wobei die Stärke der Kopplung von der Position des Lichtleiterstrangs in der longitudinalen Richtung abhängt.

**12.** Sonde für Rasterkraftmikroskopie nach einem der Ansprüche 1 bis 10, die einen Bewegungssensor aufweist, der einen optischen Resonator (ROL) fest verbunden mit dem Shuttle sowie mindestens einen planaren Lichtleiter (GES2) fest verbunden mit dem Substrat und durch evaneszente Wellen mit dem optischen Resonator gekoppelt aufweist, wobei die Stärke der Kopplung von der Position des Shuttles und damit des optischen Resonators in Bezug auf den planaren Lichtleiter in der longitudinalen Richtung abhängt.

**13.** Rasterkraftmikroskop, das mindestens eine Sonde (SM, SM1, SM2) nach einem der vorhergehenden Ansprüche umfasst.

**14.** Rasterkraftmikroskop nach Anspruch 13, das auch Folgendes umfasst:

- eine Lichtquelle (SRC1), die zum Erzeugen eines Lichtstrahls konfiguriert ist, der auf eine Region der Oberfläche einer Probe gerichtet ist, die mit der Rasterkraftmikroskopiespitze der Sonde in Wechselwirkung steht; und
- ein System (SO1) zum Erkennen von Licht des Strahls, das durch die Wechselwirkung mit der Oberfläche der Probe und der Spitze gestreut wird.

## Claims

**1.** A probe for atomic force microscopy comprising a tip (PT1) for atomic force microscopy oriented in a direction, called longitudinal direction (y), and projecting from an edge (B) of a substrate (S1) in said longitudinal direction, said tip being arranged at one end of a shuttle (PJ1) attached to said substrate at least by means of a first (ET) and a second (R, RA) structure, called support structures, wherein

- said support structures are both anchored to the substrate and are connected to said shuttle at different positions, in said longitudinal direction thereof;
- at least said first support structure mainly extends in a direction, called transverse direction (x), perpendicular to said longitudinal direction and is anchored to the substrate by at least one mechanical connection in said transverse direction, with the longitudinal and transverse directions forming a plane parallel to a main surface of the substrate;
- said support structures are deformable in the longitudinal direction, allowing the shuttle to move in said direction;
- said probe having a monolithic structure, in which at least said shuttle and said support structures are produced in a surface layer (DL), called device layer, located above a surface of said substrate, and said shuttle has an elongated shape in said longitudinal direction and projects from said edge of the substrate;
**characterised in that**
- said first support structure is at least partly suspended beyond said edge of the substrate; and
- said first support structure is attached to the substrate by means of anchors (AP1, AP2), which are also at least partly suspended beyond said edge of the substrate.

2. The probe for atomic force microscopy according to claim 1, wherein said second support structure is a micromechanical resonator (R R1, R2, RA) adapted to be excited in order to oscillate said shuttle in said longitudinal direction.

3. The probe for atomic force microscopy according to any of the preceding claims, wherein said second support structure is also a flexible structure, extending in said transverse direction and anchored to the substrate by at least one mechanical connection.

4. The probe for atomic force microscopy according to any of the preceding claims, further comprising at least one actuator (T1, T2; GEX1, GEX2, GR) configured to cause a movement of said shuttle selected from:

  - a movement in said longitudinal direction, causing bending of at least said first support structure; and
  - a movement mainly in said transverse direction, causing bending of at least one of said support structures.

5. The probe for atomic force microscopy according to any of the preceding claims, further comprising at least one conductive track (LM1) connecting an interconnection pad (PL1), deposited on said substrate, to said tip for atomic force microscopy, passing through one of said support structures and said shuttle.

6. The probe for atomic force microscopy according to claim 5, further comprising two elements (SLMM1, SLMM2) arranged on either side of the support structure supporting said conductive track, with said elements supporting respective conductive tracks (LMM1, LMM2), forming a planar waveguide with the conductive track passing through said support element.

7. The probe for atomic force microscopy according to any of claims 1 to 4, comprising two elongated structures, called lateral beams (PLL1, PLL2), extending in said longitudinal direction on either side of the shuttle, wherein both said shuttle and said lateral beams support conductive tracks (LMM10, LMM20) forming a planar waveguide.

8. The probe for atomic force microscopy according to any of the preceding claims, further having a structure extending beyond said edge of the substrate in an oblique direction towards said tip for atomic force microscopy, with said structure supporting an element selected from a planar waveguide (GOP) and a microfluidic channel (DMF).

9. The probe for atomic force microscopy according to any of the preceding claims, wherein said shuttle supports, in the vicinity of or in correspondence with said tip for atomic force microscopy, a resistive element (BPT1, BPT2), the ends of which are connected to two interconnection pads (PL1, PL2) deposited on said substrate by respective conductive tracks passing through said first support structure and said shuttle.

10. The probe for atomic force microscopy according to any of the preceding claims, having a thermo-optical actuator comprising a planar optical guide section (TGO) rigidly connected to said shuttle and extending in said transverse direction, as well as at least one planar optical guide (GEX1, GEX2) arranged on the surface of said substrate and configured to inject light into said planar optical guide section in a generally longitudinal direction.

11. The probe for atomic force microscopy according to any of the preceding claims, comprising a motion sensor having a planar optical guide section (TGO) rigidly connected to said shuttle and extending in said transverse direction, as well as two planar optical guides (GE1, GE2, GE3; GS1, GS2, GS3) arranged on the surface of said substrate and optically coupled to the opposite ends of said optical guide section, with the force of the coupling depending on the position of the optical guide section in said longitudinal direction.

12. The probe for atomic force microscopy according to any of claims 1 to 10, having a motion sensor having an optical resonator (ROL) rigidly connected to said shuttle, as well as at least one planar optical guide (GES2) rigidly connected to the substrate and evanescent-wave coupled with the said optical resonator, with the force of the coupling depending on the position of the shuttle, and therefore of the optical resonator, relative to said planar optical guide, in said longitudinal direction.

13. An atomic force microscope comprising at least one probe (SM, SM1, SM2) according to any of the preceding claims.

**14.** The atomic force microscope according to claim 13, further comprising:

> - a light source (SRC1) configured to generate a light beam directed towards a region of the surface of a sample interacting with the tip for atomic force microscopy of said probe; and
> - a system (SO1) for detecting the light of said beam, scattered by interacting with the surface of said sample and said tip.

Fig. 1A

Fig. 1B

φ

y

z

PT1

PJ

DL

S1

Fig. 1C

M1L

z

x

M1

y

M2

PT1

Fig. 2B

z

y

M1

M1L

PT1

M2

Fig. 2C

VM12

y

z

Fig. 2D

Fig. 2A

**Fig. 3**

Fig. 4

ETa

PJ

ETb

Fig. 5

Fig. 6

Fig. 7A

T10

T20

T40

T30

Fig. 7B

T10

T20

T40

T30

Fig. 7C

T20

T10

T30

EP 3 325 981 B1

Fig. 8A

26

θ

CC2

Fig. 8B

θ

CC3

Fig. 8C

θ

PT1

BPT1

PJ

BPT2

PJ1

PJ2

y

LM1

LM2

ET

ET1

ET2

PL1

PL2

R

PV1

x

Fig. 9

Fig. 10

Fig. 11

**Fig. 12**

Fig. 13

Fig. 14

Fig. 15

θ

SM

SRC1

SO1

90-θ

PT1

x

y

E1

Fig. 16A

**Fig. 16B**

Fig. 17

Fig. 18A

Fig. 18B

Fig. 18C

Fig. 18D

## RÉFÉRENCES CITÉES DANS LA DESCRIPTION

**Documents brevets cités dans la description**

- WO 2008148951 A
- US 5801472 A
- WO 2013090887 A
- WO 2005121812 A1

**Littérature non-brevet citée dans la description**

- **F. J. GIESSIBL ; C. F. QUATE.** Exploring the nanoworld with atomic force microscopy. *Physics Today,* Décembre 2006, 44-50
- **TOSHU AN et al.** Atomically-resolved imaging by frequency-modulation atomic force microscopy using a quartz length-extension resonator. *Applied Physics Letters,* 2005, vol. 87, 133114
- **B. WALTER.** Fabrication de micro-résonateurs haute fréquence pour la microscopie à force atomique sur des objets biologiques. l'Université de Sciences et Technologie de Lille, 13 Décembre 2011
- **CLEMENS T. MUELLER-FALCKE.** Switchable Stiffness Scanning Microscope Probe. Technische Universität Darmstad, Juin 2005
- **S. TALLUR ; S.A. BHAVE.** Partial Gap Transduced MEMS Optoacoustic Oscillator Beyond Gigahertz. *Journal of Microelectromechanical Systems,* 2014, (99
- **K. KARRAI et al.** *Appl. Phys. Lett,* 1995, vol. 66 (14